# EUROPEAN PATENT SPECIFICATION

(11) **EP 3 434 494 B1**
(45) Date of publication and mention of the grant of the patent: **28.10.2020**
(21) Application number: 17770206.5
(22) Date of filing: 21.03.2017
(51) Int. Cl.: B41M 7/00, B41M 5/00, C09D 11/38

(54) **IMAGE FORMING METHOD**
BILDERZEUGUNGSVERFAHREN
PROCÉDÉ DE FORMATION D'IMAGE

(30) Priority: 22.03.2016 JP 2016057025
(43) Date of publication of application: 30.01.2019
(73) Proprietor: Konica Minolta, Inc., Tokyo 100-7015 (JP)
(72) Inventor: IKEDA, Masashi, Tokyo 100-7015 (JP)
(74) Representative: Henkel & Partner mbB
(86) International application number: PCT/JP2017/011198
(87) International publication number: WO 2017/164164

(56) References cited:
- WO-A1-2012/114759
- WO-A1-2013/150802
- WO-A1-2014/206940
- WO-A1-2015/129815
- JP-A- 2013 208 807
- JP-A- 2014 043 010

## Description

### Technical Field

The present invention relates to an image forming method.

### Background Art

Inkjet recording methods, which enable simple and inexpensive image formation, have been used in various printing fields. As one type of inkjet inks, there have been known inks that contain a photocurable compound, which is cured by irradiation with actinic radiation, and a photopolymerization initiator (hereinafter, simply referred to as "actinic radiation curable inks"). Droplets of an actinic radiation curable ink are caused to be landed on a surface of a recording medium, and the droplets landed are irradiated with actinic radiation to thereby form a cured film, which is formed by curing of the ink, on the surface of the recording medium. Forming this cured film enables formation of a desired image. Image forming methods by means of actinic radiation curable inks have been attracting attention because of their capability of forming images having high adhesion irrespective of the water absorbing property of recording media.

As one type of actinic radiation curable inks, there have been developed inks that contain a gelling agent and undergo temperature-induced reversible sol-gel phase transition (hereinafter, simply referred to as "gel inks"). After the gel ink is warmed to be a sol and ejected from a nozzle of an inkjet head, the ink cooled undergoes gellation when landed on the surface of a recording medium. Thus, the ink is characterized by having high pinning properties after landing. Irradiating the gel ink pinned on the surface of the recording medium with actinic radiation causes curing of the gel ink to thereby form an image.

Another method for forming an image is known, in which droplets of a gel ink landed on the surface of a recording medium are irradiated with actinic radiation while the amount of oxygen present around the ink is controlled. For example, PTL 1 describes a method for controlling the gloss of an image to be formed by irradiating droplets of a gel ink landed on the surface of a recording medium with actinic radiation in an atmosphere in which the oxygen concentration is adjusted.

There is known an image forming method in which an actinic radiation curable ink other than gel inks is irradiated with actinic radiation in an atmosphere in which the oxygen concentration is adjusted. In actinic radiation curable inks, radical polymerizable compounds and cationic polymerizable compounds are often used as the photocurable compound described above. Of these, it is known that polymerization of a radical polymerizable photocurable compound (hereinafter, also simply referred to as a "radical polymerizable compound") is likely to be inhibited by oxygen. When the polymerization is inhibited by oxygen, the hardness of a cured film to be formed by curing the actinic radiation curable ink decreases. Thus, the abrasion resistance decreases, blocking is more likely to occur, and moreover, an unreacted radical polymerizable compound may be vaporized to emit an odor. In contrast, it is conceived that reducing the amount of oxygen (oxygen concentration or oxygen partial pressure) present around the ink in irradiation of actinic radiation (in polymerization of the ink) can suppress inhibition of the polymerization caused by oxygen.

For example, PTL 2 mentions that inhibition of the polymerization caused by oxygen is suppressed by irradiating droplets of an actinic radiation curable ink landed on the surface of a recording medium with actinic radiation under a condition of oxygen partial pressure of 1.5 × 10⁻² MPa or less. PTL 2 also mentions that an increase in reactive functional groups by setting the content of a functional polymerizable compound to 80mass% or more with respect to radical polymerizable compounds contained in an actinic radiation curable ink can prevent an unreacted radical polymerizable compound from remaining or vaporizing.

PTL 3 mentions that irradiating droplets of an actinic radiation curable ink having a ratio of the amount of a radical polymerization initiator to the amount of a radical polymerizable compound (amount of radical polymerization initiator/amount of radical polymerizable compound) of 0.02 or more and 0.16 with actinic radiation in an environment in which the oxygen concentration is lower than that in the atmosphere can prevent an unreacted radical polymerizable compound or unreacted radical polymerization initiator from remaining or vaporizing. PTL 3 also mentions that since a bifunctional radical polymerizable compound has a high reaction rate, the compound is unlikely to cause an unreacted radical polymerizable compound or unreacted radical polymerization initiator to remain.

PTL 4 discloses an image forming method that makes use of an active ray-curable inkjet ink capable of forming high definition images stably even in high speed recording and having satisfactory adaptability to various recording materials, the method comprising the step of applying the inkjet ink to a recording medium while adjusting the temperature of the recording material to a range of (sol-gel phase transition temperature ± 20°C) to (sol-gel phase transition temperature ± 10°C) of the inkjet ink. The active ray-curable inkjet ink comprises at least 1 to 10 mass% of a photoinitiator, 30 to 70 mass% of a first photopolymerizable compound, 10 to 40 mass% of a second photopolymerizable compound, and not more than 10 mass% of a gelling agent having a total carbon number of 12 or greater and containing a linear or branched alkyl chain having 3 or more carbon atoms.

PTL 5 discloses an inkjet recording method that makes use of an active light beam-curable inkjet magenta ink having fine storage stability, good pinning property and a small gloss difference from other colors, the method comprising the steps of injecting the inkjet magenta ink from an inkjet recording head onto a recording medium, and irradiating the inkjet magenta ink that has landed on the recording medium with an active light beam such as ultraviolet rays. The active light beam-curable inkjet magenta ink comprises at least a photopolymerization initiator, a photopolymerizable compound, 1.5 to 3.0 mass% of a crystalline gelling agent, a pigment and a polymer dispersing agent, wherein the pigment is a solid-solution of PV19 and PR202 which has been subjected to surface treatments with alumina and sulfonic acid.

PTL 6 discloses an inkjet recording method in which the elution amount (migration) of the components in a film to the outside is small, a printed matter is not easily shrunken, and a printed matter having suppressed odor and excellent curability and blocking resistance is obtained, the method comprising the steps of discharging an ink composition onto a resinous support having a thickness of from 10 to 90 µm, and irradiating active rays at an oxygen partial pressure of 0.15 atm or less to cure the ink composition. The ink composition comprises a polymerization initiator and a polymerizable compound, wherein the polymerizable compound includes a polyfunctional (meth)acrylate compound, a monofunctional (meth)acrylate compound and N-vinyllactams in a total amount of 60% by mass or more with respect to the total ink composition.

### Citation List

### Patent Literatures

PTL 1 Japanese Patent Application Laid-Open No. 2010-17710
PTL 2 Japanese Patent Application Laid-Open No. 2014-159114
PTL 3 Japanese Patent Application Laid-Open No. 2015-80921
PTL 4 United States Patent No. 8,877,827 B2
PTL 5 United States Patent Application Publication No. 2016/0347959 A1
PTL 6 European Patent Application Publication No. 2 832 553 A1

### Summary of Invention

### Technical Problem

PTL 1 mentions that irradiating droplets of a gel ink landed on the surface of a recording medium with actinic radiation in an atmosphere having an amount of oxygen adjusted can control the gloss of an image to be formed. According to consideration by the present inventors, however, images formed using the gel ink described in PTL 1 were likely to undergo blooming, which is a phenomenon in which the gelling agent precipitates on the surface of a cured film, and thus, the appearance of the images was likely to be ruined.

In contrast, in Examples of PTL 1, the proportion of a polyfunctional photocurable compound is raised to allow a densely crosslinked structure to be formed in the cured film and to allow the photocurable compound to be sufficiently polymerized and crosslinked. It is conceived that the foregoing restricts the movement of the gelling agent in the cured film to thereby reduce occurrence of blooming. In this method, however, when the recording medium is bent after the image was formed, the image was likely to undergo cracking (hereinafter, cracking of an image caused by bending is also simply referred to as "bend cracking"). As described above, it has been difficult to simultaneously suppress blooming and suppress bend cracking.

According to the consideration of the present inventors, the occurrence of bend cracking described above is markedly observed also in methods for curing an actinic radiation curable ink containing a polyfunctional radical polymerizable compound in an atmosphere in which the oxygen concentration is reduced, described in PTLs 2 and 3.

The present invention has been made in the view of the above problems, and an object of the present invention is to provide an image forming method in which blooming is unlikely to occur and bend cracking is also unlikely to occur in forming an image using a gel ink by an inkjet method. The invention is defined by the claims.

### Solution to Problem

The above problem is solved by an image forming method as defined in claim 1. The image forming method includes the steps of:
ejecting droplets of an actinic radiation-curable inkjet ink from a nozzle of an inkjet head and landing the droplets on a surface of a recording medium, wherein the inkjet ink includes a radical polymerization initiator (A), a polyfunctional radical polymerizable compound (B), and a gelling agent, and has a ratio of a total mass of the radical polymerization initiator (A) to a total mass of the polyfunctional radical polymerizable compound (B) ((A)/(B)) of 0.01 or more and less than 0.07; and
irradiating the droplets landed on the recording medium with actinic radiation in an atmosphere having an oxygen concentration of 0.1 vol% or more and 10.0 vol% or less.

### Advantageous Effects of Invention

According to the present invention, there is provided an image forming method in which blooming is unlikely to occur and bend cracking is also unlikely to occur in forming an image using a gel ink by an inkjet method.

### Brief Description of Drawings

FIG. 1 is a side view of an inkjet image forming apparatus according to one embodiment of the present invention.
FIG. 2 is a side view of an inkjet image forming apparatus according to another embodiment of the present invention.
FIG. 3 is a side view of an inkjet image forming apparatus according to still another embodiment of the present invention.

### Description of Embodiments

The present inventors, as a result of intensive studies, have found that, by use of an actinic radiation-curable inkjet ink that contains a radical polymerization initiator (component A), a polyfunctional radical polymerizable compound (component B), and a gelling agent, and has a ratio of the total mass of the radical polymerization initiator (A) to the total mass of the polyfunctional radical polymerizable compound (B) (hereinafter, also simply referred to as "(A)/(B)") of 0.01 or more and less than 0.07 (hereinafter, also simply referred to as "component-adjusted gel ink"), formation of an image by irradiating the component-adjusted gel ink described above landed on the surface of a recording medium with actinic radiation in an atmosphere having an oxygen concentration of 0.1 vol% or more and 10.0vol% or less can suppress occurrence of blooming and occurrence of bend cracking, having completed the present invention.

The present inventors presume that the action mechanism for suppressing occurrence of blooming and occurrence of bend cracking by the method described above is as follows.

From the viewpoint of suppression of blooming, effective is a method of forming a densely crosslinked structure in the cured film by raising the proportion of the polyfunctional radical polymerizable compound or allowing the radical polymerizable compound to be sufficiently polymerized or crosslinked by reducing the oxygen concentration. According to this method, mesh-like dense hydrocarbon chains formed by crosslinking the radical polymerizable compound are likely to be formed inside the cured film. The mesh-like hydrocarbon chains inhibit the crystallized gelling agent from moving inside the cured film, and thus seem to make the gelling agent unlikely to move to the surface of the cured film to thereby reduce occurrence of blooming. However, these methods have a problem of making bend cracking likely to occur because densely formed hydrocarbon chains raise the hardness of the cured film.

Meanwhile, when the hardness of the cured film is lowered by raising the amount of the monofunctional radical polymerizable compound and reducing the amount of the radical polymerization initiator, it is conceived that bending is less likely to occur. However, when the amount of the monofunctional radical polymerizable compound is increased, the dense mesh-like hydrocarbon chains are less likely to be formed, and thus the crystallized gelling agent is more likely to move inside the cured film. When the amount of the radical polymerization initiator is reduced, it is not possible to sufficiently raise the hardness of the surface of the cured film. When such an ink is made to contain a gelling agent in order to improve the pinning properties of the ink, the crystallized gelling agent precipitates from the surface of the cured film and blooming is more likely to occur.

In contrast, the present inventors have found that the gelling agent present inside the cured film provides the cured film with moderate flexibility to thereby reduce occurrence of bend cracking. The present inventors have further advanced the study to develop a method for forming a cured film having moderate flexibility by further exerting the action of the gelling agent described above in an ink that contains a polyfunctional photocuring compound and of which crosslinked structure density is appropriately adjusted by reducing the amount of a radical polymerization initiator. Thereby it is conceived that bend cracking of an image formed is less likely to occur.

However, when the degree of polymerization and crosslinking of the radical polymerizable compound is adjusted such that bend cracking of the image is unlikely to occur, the hardness of the surface of the cured film becomes insufficient, and blooming is more likely to occur, conversely. In contrast, the present inventors have found that moderately lowering the oxygen concentration in the atmosphere in polymerizing and crosslinking the radical polymerizable compound by irradiating droplets of the ink with actinic radiation can raise the crosslinked structure density in the vicinity of the surface of the cured film to thereby raise the hardness of the surface of the cured film and to enable blooming to be suppressed. It is also conceived that moderately lowering the oxygen concentration raises the curability of the photocurable compound due to sufficient polymerization and crosslinking at the contact face between the ink droplets and the recording medium and thus the adhesion to the recording medium is also improved.

That is to say, in the method of the present invention, it is conceived that use of a gel ink (component-adjusted gel ink) having a mass ratio of the radical polymerization initiator (component A) to the polyfunctional radical polymerizable compound (component B) ((A)/(B)) of 0.01 or more and less than 0.07 suppresses occurrence of bend cracking because the density of a crosslinked structure to be formed inside a cured film is moderately adjusted and additionally the gelling agent provides flexibility to thereby moderately adjust the hardness of the cured film.

The crosslinked structure suppresses the movement of the crystallized gelling agent to a certain degree. In addition to this, in the method of the present invention, since formation of an image by irradiating droplets of the component-adjusted gel ink landed on a recording medium with actinic radiation in an atmosphere having an oxygen concentration of 0.1vol% or more and 10.0vol% or less can possibly diffuse a sufficient amount of radicals to the periphery of the ink, the vicinity of the surface of the cured film is sufficiently cured. In the method of the present invention, it is conceived that occurrence of blooming can be reduced by suppression of movement of the gelling agent by the crosslinked structure and suppression of precipitation by sufficiently curing the vicinity of the surface of the cured film. Adjustment of the oxygen concentration described above, which does not unnecessarily raise the crosslinking density inside the cured film, is conceived not to impair the flexibility inside the cured film.

It is conceived that effects of suppressing bend cracking by forming a moderately crosslinked structure inside the cured film described above to obtain flexibility of the cured film as well as by providing flexibility inside the cured film with the gelling agent and, meanwhile, of suppressing blooming by raising the hardness of the surface of the cured film are achieved only when (A)/(B) and the oxygen concentration are both adjusted. For example, with the gel ink described in PTL 1 of which (A)/(B) is not adjusted within the range described above, when an image is formed while the oxygen concentration is lowered in order to suppress blooming, the crosslinked structure inside the cured film becomes excessively dense and the hardness of the cured film is more likely to increase. Accordingly, it is conceived that bend cracking is likely to occur in an image formed particularly on a recording medium having a large thickness.

The effect described above is conceived to be effective particularly when an image is formed on a recording medium having a large thickness. According to the findings of the present inventors, blooming is likely to occur particularly when an image is formed on a recording medium having a large thickness. The reason is not necessarily clear, but a recording medium having a large thickness has a large heat capacity and is unlikely to release heat, and thus the temperature of the surface of recording medium is likely to increase. It is thus conceived that a card house structure described below is unlikely to be formed in the droplets of the ink landed or the amount of kinetic energy of the gelling agent increases. That is to say, when the temperature of the surface of the recording medium is high, the cooling rate of the ink landed decreases, the gelling agent is slowly crystallized, and thereby the size of crystals of the gelling agent is increased. When the temperature of the surface of the recording medium is high, the crystallized gelling agent is likely to redissolve. These factors make it difficult for a card house structure to be formed. When the card house structure is unlikely to be formed, the crystallized gelling agent is likely to move and thus blooming is likely to occur. When the gelling agent has a large amount of kinetic energy, the gelling agent is likely to move and thus blooming is also likely to occur. However, according to the method of the present invention, the action described above can sufficiently reduce blooming even when an image is formed on a recording medium having a large thickness.

In the actinic radiation curable inks described in PTL 2 and PTL 3 which contain no gelling agent, it is conceived that bend cracking is likely to occur because the effect of imparting moderate flexibility by a gelling agent is not achieved.

### 1. Inkjet Recording Method

One embodiment of the present invention relates to an inkjet recording method including ejecting droplets of a component-adjusted gel ink from a nozzle of an inkjet head and landing the droplets on the surface of a recording medium (hereinafter, also simply referred to as "landing step") and irradiating the droplets landed on the recording medium with actinic radiation in an atmosphere having an oxygen concentration of 0.1vol% or more and 10.0vol% or less (hereinafter, also simply referred to as "irradiating step").

### 1-1. Component-adjusted Gel Ink

A component-adjusted gel ink contains a radical polymerization initiator (component A), a polyfunctional radical polymerizable compound (component B), and a gelling agent. The ratio of the total mass of the component A to the total mass of the component B of the component-adjusted gel ink ((A)/(B)) is 0.01 or more and less than 0.07. The component-adjusted gel ink undergoes temperature-induced reversible sol-gel phase transition because it contains the gelling agent.

### 1-1-1. Radical Polymerization Initiator

The radical polymerization initiator (component A) is only required to be a compound capable of starting polymerization of a radical polymerizable compound by generating a radical upon irradiation of light. Only one radical polymerization initiator or two or more radical polymerization initiator may be contained in the component-adjusted gel ink.

The content of the radical polymerization initiator is only required to be in a range such that (A)/(B) is 0.01 or more and less than 0.07 and that the ink is sufficiently cured. For example, the content can be 0.3mass% or more and 10mass% or less, preferably 1.0mass% or more and 5.0mass% or less, more preferably 1.0mass% or more and 3.0mass% or less, based on the total mass of the component-adjusted gel ink.

The ratio of the mass of the radical polymerization initiator (A) to the total mass of the polyfunctional radical polymerizable compound (B) described below (A/B) is 0.01 or more and less than 0.07. When (A/B) is 0.01 or more, the radical polymerizable compound is sufficiently polymerized and crosslinked by the radical polymerization initiator, and thus the curability and adhesion to recording medium of the image formed are further improved. When (A/B) is 0.07 or more, the radical polymerizable compound is crosslinked not excessively, and thus bend cracking of the image formed is less likely to occur. From the viewpoint of enhancing both effects of occurrence of bend cracking and occurrence of blooming, (A/B) is preferably 0.02 or more and 0.04 or less. When the component-adjusted gel ink contains pigments, (A/B) may be appropriately adjusted for each color on the basis of the absorbance of each pigment at the irradiation wavelength of actinic radiation.

The radical polymerization initiator includes a cleaving-type radical polymerization initiator and a hydrogen abstraction-type radical polymerization initiator.

Examples of the cleaving-type radical polymerization initiator include acetophenone initiators, benzoin initiators, acyl phosphine oxide initiators, benzyl, and methylphenyl glyoxy ester.

Examples of the hydrogen abstraction-type radical initiator include benzophenone initiators, thioxanthone initiators, aminobenzophenone initiators, 10-butyl-2-chloro-acridone, 2-ethylanthraquinone, 9,10-phenanthrenequinone, and camphor quinone.

The molecular weight of the radical polymerization initiator is not particularly limited so long as the effects of suppressing occurrence of bend cracking and occurrence of blooming are achieved. From the viewpoint of further raising the crosslinking density of the polyfunctional radical polymerizable compound in the vicinity of the surface of the cured film to thereby further reduce occurrence of blooming, the molecular weight of the radical polymerization initiator is preferably 350 or more. When the component-adjusted gel ink contains two or more radical polymerization initiators, the proportion of a radical polymerization initiator having a molecular weight of 350 or more is preferably 40mass% or more, more preferably 70mass% or more, based on the total mass of the radical polymerization initiator. From the viewpoint of more suitably achieving the above effects, the component-adjusted gel ink preferably contains substantially no radical polymerization initiator having a molecular weight of less than 350.

### 1-1-2. Radical Polymerizable Compound

The radical polymerizable compound is only required to be a compound that has a function of curing an ink by generating a polymerization reaction by a reaction with a radical to thereby polymerize or crosslink the ink. The radical polymerizable compound may be any of a monomer, polymerizable oligomer, prepolymer, and mixture thereof. The component-adjusted gel ink contains a polyfunctional radical polymerizable compound (component B) as a radical polymerizable compound. Only one component B or two or more components B may be contained in the component-adjusted gel ink.

The content of the polyfunctional radical polymerizable compound can be, for example, 1 mass% or more and 97mass% or less based on the total mass of the component-adjusted gel ink.

The radical polymerizable compound is preferably an unsaturated carboxylate compound, more preferably a (meth)acrylate. In the present invention, a "(meth)acrylate" means an acrylate or methacrylate, a "(meth)acryloyl group" means an acryloyl group or methacryloyl group, and "(meth)acryl" means acryl or methacryl.

Examples of the polyfunctional radical polymerizable compounds that are (meth)acrylates include bifunctional (meth)acrylates including triethylene glycol di(meth)acrylate, tetraethylene glycol di(meth)acrylate, polyethylene glycol di(meth)acrylate, tripropylene glycol di(meth)acrylate, polypropylene glycol di(meth)acrylate, 1,4-butanediol di(meth)acrylate, 1,6-hexanediol di(meth)acrylate, 1,9-nonanediol di(meth)acrylate, neopentyl glycol di(meth)acrylate, dimethylol-tricyclodecane di(meth)acrylate, di(meth)acrylate having a bisphenol A structure, hydroxypivalic acid neopentyl glycol di(meth)acrylate, polytetramethylene glycol di(meth)acrylate, and tripropylene glycol di(meth)acrylate, trifunctional or higher functional (meth)acrylates including trimethylolpropane tri(meth)acrylate, pentaerythritol tri(meth)acrylate, pentaerythritol tetra(meth)acrylate, dipentaerythritol hexa(meth)acrylate, ditrimethylolpropane tetra(meth)acrylate, glycerin propoxy tri(meth)acrylate, and pentaerythritol ethoxy tetra(meth)acrylate, oligomers having a (meth)acryloyl group including polyester acrylate oligomers, and modified products thereof. Examples of the modified products described above include ethylene oxide-modified (EO-modified) acrylates including an ethylene oxide group inserted therein and propylene oxide-modified (PO-modified) acrylates including a propylene oxide inserted therein.

Of these, the radical polymerizable compound preferably includes a trifunctional or higher functional radical polymerizable compound, from the viewpoint of raising a degree of the radical polymerizable compound contributing to the hardness of the cured film to thereby reduce a difference in the hardness of the cured film due to types and amounts of other components. Raising the degree of contribution of the radical polymerizable compound can reduce occurrence of a difference in the surface curability among a plurality of inks due to types and different amounts of other components such as colorants. From the viewpoint described above, the content of the trifunctional or higher functional radical polymerizable compound is preferably 40mass% or more based on the total mass of the component-adjusted gel ink. Meanwhile, from the viewpoint of preventing the hardness of the cured film from increasing excessively and reducing occurrence of bend cracking, the content of the trifunctional or higher functional radical polymerizable compound is preferably 60mass% or less. When an image is formed on a recording medium having a large thickness (e.g., a recording medium having a thickness of 0.6 mm or more), the content is preferably 50mass% or less.

The polyfunctional radical polymerizable compound (component B) moderately raises the viscosity of the ink in heating to make the viscosity controllable in a moderate range described below.

The component-adjusted gel ink may contain a monofunctional radical polymerizable compound so long as the effects of suppressing occurrence of bend cracking and occurrence of blooming are achieved. However, from the viewpoint of further reducing occurrence of blooming, the component-adjusted gel ink preferably contains substantially no monofunctional radical polymerizable compound.

Examples of the monofunctional radical polymerizable compounds that are (meth)acrylates include isoamyl (meth)acrylate, stearyl (meth)acrylate, lauryl (meth)acrylate, octyl (meth)acrylate, decyl (meth)acrylate, isomyristyl (meth)acrylate, isostearyl (meth)acrylate, 2-ethylhexyl-diglycol (meth)acrylate, 2-hydroxybutyl (meth)acrylate, 2-(meth)acryloyloxy ethyl hexahydrophthalate, butoxyethyl (meth)acrylate, ethoxy diethylene glycol (meth)acrylate, methoxy diethylene glycol (meth)acrylate, methoxy polyethylene glycol (meth)acrylate, methoxy propylene glycol (meth)acrylate, phenoxyethyl (meth)acrylate, tetrahydrofuryl (meth)acrylate, isobornyl (meth)acrylate, 2-hydroxyethyl (meth)acrylate, 2-hydroxypropyl (meth)acrylate, 2-hydroxy-3-phenoxypropyl (meth)acrylate, 2-(meth)acryloyloxy ethyl succinate, 2-(meth)acryloyloxy ethyl phthalate, 2-(meth)acryloyloxyethyl-2-hydroxyethyl-phthalate, and t-butylcyclohexyl (meth)acrylate.

### 1-1-3. Gelling Agent

The gelling agent is organic matter that is solid at normal temperature and turns into liquid when heated. From the viewpoint of more easily controlling ejection of a solated ink and the pinning properties of the ink landed on a recording medium, the melting point of the gelling agent is preferably 30°C or more and less than 150°C.

The content of the gelling agent is preferably 1.0mass% or more and 10.0mass% or less based on the total mass of the ink. When the content of gelling agent is set at 1.0mass% or more, it is possible to sufficiently raise the pinning properties of the ink to thereby form a higher definition image. When the content of the gelling agent is set at 10.0mass% or less, the gelling agent is less likely to precipitate on the surface of an image formed. Additionally, it is possible to make the gloss of the image closer to the gloss of the image formed with other ink and to enhance the ink ejectability from an inkjet head. From the above viewpoint, the content of the gelling agent in the component-adjusted gel ink is preferably 1.0mass% or more and 5.0mass% or less, more preferably 1.0mass% or more and 3.0mass% or less.

Also from the viewpoint below, the gelling agent is preferably one that may form a structure in which the radical polymerizable compound is encapsulated in a three-dimensional space formed by the gelling agent crystallized in a plate form at a temperature equal to or lower than the gelling temperature of the ink (this structure is referred to as a "card house structure" hereinafter). When a card house structure is formed from the gelling agent in droplets of the ink immediately after landed on a recording medium, the liquid radical polymerizable compound is retained in the space, and thus the ink droplets are less likely to wet spread to thereby further enhance the pinning properties of the ink. With enhanced pinning properties of the ink, the ink droplets landed on the recording medium are less likely to coalesce to one another to thereby enable formation of a higher definition image.

In order to form a card house structure, the radical polymerizable compound and the gelling agent are preferably compatible to each other in the ink. In contrast, when the radical polymerizable compound and the gelling agent dissolved in the ink are phase-separated from each other, it may be difficult to form a card house structure. When the radical polymerizable compound and the gelling agent are compatible to each other, the gelling agent crystallizes further inside the cured film. Then, blooming, which is caused by crystallization of the gelling agent in the vicinity of the surface of the cured film, is less likely to occur.

Examples of the gelling agents suitable for formation of the card house structure by crystallization include ketone waxes, ester waxes, petroleum waxes, plant waxes, animal waxes, mineral waxes, hydrogenated castor oil, modified waxes, higher fatty acids, aliphatic alcohols, hydroxystearic acid, fatty acid amides including N-substituted fatty acid amides and specialty fatty acid amides, higher amines, sucrose fatty acid esters, synthetic waxes, dibenzylidene sorbitols, dimeric acid, and dimer diols.

Examples of the ketone waxes include dilignoceryl ketone, dibehenyl ketone, distearyl ketone, dieicosyl ketone, dipalmityl ketone, dilauryl ketone, dimyristyl ketone, myristyl palmityl ketone, and palmityl stearyl ketone

Examples of the ester waxes include behenyl behenate, icosyl icosanoate, stearyl stearate, palmityl stearate, cetyl palmitate, myristyl myristate, cetyl myristate, myricyl cerotate, stearyl stearate, oleyl palmitate, glycerin fatty acid esters, sorbitan fatty acid esters, propylene glycol fatty acid esters, ethylene glycol fatty acid esters, and polyoxyethylene fatty acid esters.

Examples of commercially available products of the ester waxes include EMALEX series manufactured by Nihon Emulsion Co., Ltd. ("EMALEX" is a registered trademark of the company.) and RIKEMAL series and POEM series manufactured by Riken Vitamin Co., Ltd. (both "RIKEMAL" and "POEM" are registered trademarks of the company).

Examples of the petroleum waxes include petroleum waxes including paraffin wax, microcrystalline wax, and petrolatum.

Examples of the plant waxes include candelilla wax, carnauba wax, rice wax, sumac wax, jojoba oil, solid jojoba wax, and jojoba ester.

Examples of the animal waxes include beeswax, lanolin, and spermaceti.

Examples of the mineral waxes include montan wax and hydrogenated wax.

Examples of the modified waxes include montan wax derivatives, paraffin wax derivatives, microcrystalline wax derivatives, 12-hydroxystearic acid derivatives, and polyethylene wax derivatives.

Examples of the higher fatty acids include behenic acid, arachidic acid, stearic acid, palmitic acid, myristic acid, lauric acid, oleic acid, and erucic acid.

Examples of the aliphatic alcohols include stearyl alcohol and behenyl alcohol.

Examples of the hydroxystearic acids include 12-hydroxystearic acid.

Examples of the fatty acid amides include lauric acid amide, stearic acid amide, behenic acid amide, oleic acid amide, erucic acid amide, ricinoleic acid amide, and 12-hydroxystearic acid amide.

Examples of commercially available products of the fatty acid amides include NIKKA AMIDE series manufactured by Nippon Kasei Chemical Co., Ltd. ("NIKKA AMIDE" is a registered trademark of the company.), ITOWAX series manufactured by Itoh Oil Chemicals Co., Ltd., and FATTY AMID series manufactured by Kao Corporation.

Examples of the N-substituted fatty acid amides include N-stearyl stearic acid amide and N-oleyl palmitic acid amide.

Examples of the specialty fatty acid amides include N,N'-ethylene bisstearylamide, N,N'-ethylene bis-12-hydroxystearylamide, and N,N'-xylylene bisstearylamide.

Examples of the higher amines include dodecylamine, tetradecylamine, and octadecylamine.

Examples of the sucrose fatty acid esters include sucrose stearic acid and sucrose palmitic acid.

Examples of commercially available products of the sucrose fatty acid esters include RYOTO Sugar Ester series manufactured by Mitsubishi-Kagaku Foods Corporation ("RYOTO" is a registered trademark of the company.).

Examples of the synthetic waxes include polyethylene wax and α-olefin-maleic anhydride copolymer wax.

Examples of commercially available products of the synthetic waxes include UNILIN series manufactured by Baker-Petrolite ("UNILIN" is a registered trademark of the company.).

Examples of the dibenzylidene sorbitols include 1,3:2,4-bis-O-benzylidene-D-glucitol.

Examples of commercially available products of the dibenzylidene sorbitols include GELALL D manufactured by New Japan Chemical Co., Ltd. ("GELALL" is a registered trademark of the company.).

Examples of commercially available products of the dimer diols include PRIPOR series manufactured by CRODA International Pic ("PRIPOR" is a registered trademark of the company.).

Of these gelling agents, the gelling agent is preferably an aliphatic ester or aliphatic ketone having a linear alkyl group containing 12 or more and 25 or less carbon atoms, from the viewpoint of enhancing the pinning properties of the ink and further reducing occurrence of blooming. In the aliphatic ester or aliphatic ketone, it is only required that only one carbon chain of two carbon chains sandwiching the ketone group or ester group is a linear alkyl group containing 12 or more and 25 or less carbon atoms. From the viewpoint of more easily achieving the effect, both the two carbon chains are preferably linear alkyl groups that satisfy the requirement of the number of carbon atoms. When the number of carbon atoms is 12 or more, the crystallinity of the gelling agent is further enhanced, and a more sufficient space is generated in the card house structure. For this reason, it is conceived that the radical polymerizable compound is more likely to be sufficiently encapsulated in the space and the pinning properties of the ink are further enhanced. In contrast, when the number of carbon atoms is 25 or less, it is conceived that the radical polymerizable compound and the gelling agent are more likely to be compatible to each other, the card house structure is likely to be formed, and thus blooming is less likely to occur. Only one aliphatic ester or aliphatic ketone or two or more aliphatic esters or aliphatic ketones may be contained in the component-adjusted gel ink. Only either one of or both the aliphatic ester and aliphatic ketone may be contained in the component-adjusted gel ink.

Examples of the aliphatic esters having a linear alkyl group containing 12 or more and 25 or less carbon atoms include behenyl behenate (number of carbon atoms: 21-22), icosyl icosanoate (number of carbon atoms: 19-20), behenyl stearate (number of carbon atoms: 17-21), stearyl stearate (number of carbon atoms: 17-18), palmityl stearate (number of carbon atoms: 17-16), lauryl stearate (number of carbon atoms: 17-12), cetyl palmitate (number of carbon atoms: 15-16), stearyl palmitate (number of carbon atoms: 15-18), myristyl myristate (number of carbon atoms: 13-14), cetyl myristate (number of carbon atoms: 13-16), octyldodecyl myristate (number of carbon atoms: 13-20), stearyl oleate (number of carbon atoms: 17-18), stearyl erucate (number of carbon atoms: 21-18), stearyl linoleate (number of carbon atoms: 17-18), behenyl oleate (number of carbon atoms: 18-22), and arachidyl linoleate (number of carbon atoms: 17-20). The numbers of carbon atoms in the above parentheses each represent the number of carbon atoms of each of two hydrocarbon groups separated by the ester group.

Examples of commercially available products of the aliphatic esters having a linear alkyl group containing 12 or more and 25 or less carbon atoms include UNISTER M-2222SL and SPERMACETI manufactured by NOF Corporation ("UNISTER" is a registered trademark of the company.), EXCEPARL SS and EXCEPARL MY-M manufactured by Kao Corporation ("EXCEPARL" is a registered trademark of the company.), EMALEX CC-18 and EMALEX CC-10 manufactured by NIHON EMULSION Co., Ltd. ("EMALEX" is a registered trademark of the company.), and AMREPS PC manufactured by Kokyu Alcohol Kogyo Co., Ltd. ("AMREPS" is a registered trademark of the company.). These commercially available products, which are often mixtures of two or more esters, may be separated and purified, as required, before added to the ink.

Examples of the aliphatic ketones having a linear alkyl group containing 12 or more and 25 or less carbon atoms include dilignoceryl ketone (number of carbon atoms: 23-23), dibehenyl ketone (number of carbon atoms: 21-21), distearyl ketone (number of carbon atoms: 17-17), dieicosyl ketone (number of carbon atoms: 19-19), dipalmityl ketone (number of carbon atoms: 15-15), dimyristyl ketone (number of carbon atoms: 13-13), lauryl myristyl ketone (number of carbon atoms: 11-14), lauryl palmityl ketone (11-16), myristyl palmityl ketone (13-16), myristyl stearyl ketone (13-18), myristyl behenyl ketone (13-22), palmityl stearyl ketone (15-18), palmityl behenyl ketone (15-22), and stearyl behenyl ketone (17-22). The numbers of carbon atoms in the above parentheses each represent the number of carbon atoms of each of two hydrocarbon groups separated by the carbonyl group.

Examples of commercially available products of the aliphatic ketones having a linear alkyl group containing 12 or more and 25 or less carbon atoms include 18-Pentatriacontanon and Hentriacontan-16-on manufactured by Alfa Aeser and KAO Wax T1 manufactured by Kao Corporation. These commercially available products, which are often mixtures of two or more ketones, may be separated and purified, as required, before added to the ink.

When a gelling agent having a photocurable functional group is used, blooming is less likely to occur. This is because the gelling agent reacts with the radical polymerizable compound, and the radical polymerizable compound is polymerized or crosslinked to form a hydrocarbon chain(s), and the gelling agent is incorporated to the hydrocarbon chain(s). According to the findings of the present inventors, however, a gelling agent having a photocurable functional group does not sufficiently achieve an effect of imparting flexibility to the cured film described above, and thus the cured film formed from an ink containing a gelling agent like this has extremely high hardness and is more likely to undergo bend cracking. For this reason, from the viewpoint of suppressing occurrence of bend cracking, the gelling agent contained in the component-adjusted gel ink preferably includes no photocurable functional group.

### 1-1-4. Other components

The component-adjusted gel ink may additionally contain other components including a cationic polymerizable compound, photoacid generating agent, colorant, dispersant, photosensitizer, polymerization inhibitor, and surfactant, besides the components described above, so long as the effects of suppressing occurrence of bend cracking and occurrence of blooming are achieved. Only one of such components or two or more such components may be contained in the component-adjusted gel ink.

Examples of the cationic polymerizable compounds include epoxy compounds, vinyl ether compounds, and oxetane compounds.

Examples of the photoacid generating agents include known sulfonium salts, ammonium salts, diaryl iodonium salts, and triaryl sulfonium salts, such as triaryl sulfonium hexafluorophosphate, iodonium(4-methylphenyl)(4-(2-methylpropyl)phenyl)hexafluorophosphate, triaryl sulfonium hexafluoroantimonate, and 3-methyl-2-butenyl tetramethylene sulfonium hexafluoroantimonate.

Colorants include dyes and pigments. From the viewpoint of obtaining an image having satisfactory weatherability, the colorant is preferably a pigment. The pigment can be selected from, for example, yellow (yellow) pigments, red or magenta pigments, blue or cyan pigments, and black pigments, depending on the color and the like of an image to be formed.

Examples of the dispersants include hydroxy group-containing carboxylate esters, salts of esters of a long chain polyaminoamide and a high molecular weight acid, salts of high molecular weight polycarboxylic acid, salts of esters of a long chain polyaminoamide and a polar acid, high molecular weight unsaturated acid esters, macromolecular copolymers, modified polyurethane, modified polyacrylate, polyether ester-type anionic active agents, naphthalenesulfonic acid-formalin condensate salts, aromatic sulfonic acid-formalin condensate salts, polyoxyethylene alkyl phosphate esters, polyoxyethylene nonylphenylether, and stearylamine acetate.

The content of the dispersant can be 20mass% or more and 70mass% or less based on the total mass of the pigment, for example.

Examples of the polymerization inhibitor include (alkyl)phenol, hydroquinone, catechol, resorcin, p-methoxyphenol, t-butyl catechol, t-butyl hydroquinone, pyrogallol, 1,1-picrylhydrazyl, phenothiazine, p-benzoquinone, nitrosobenzene, 2,5-di-t-butyl-p-benzoquinone, dithiobenzoyl disulfide, picric acid, cupferrone, aluminum N-nitrosophenyl hydroxylamine, tri-p-nitrophenylmethyl, N-(3-oxyanilino-1,3-dimethylbutylidene)aniline oxide, dibutyl cresol, cyclohexanone oxime cresol, guaiacol, o-isopropylphenol, butyraldoxime, methyl ethyl ketoxime, and cyclohexanone oxime.

Examples of the surfactants include anionic surfactants such as dialkyl sulfosuccinic acid salts, alkylnaphthalenesulfonic acid salts, and fatty acid salts, nonionic surfactants such as polyoxyethylene alkyl ethers, polyoxyethylene alkyl aryl ethers, acetylene glycols, and polyoxyethylene-polyoxypropylene block copolymers, cationic surfactants such as alkylamine salts and quaternary ammonium salts, silicone-based and fluorine-based surfactants.

Examples of commercially available products of the silicone-based surfactants include KF-351A, KF-352A, KF-642, and X-22-4272 manufactured by Shin-Etsu Chemical Co., Ltd., BYK 307, BYK 345, BYK 347, and BYK 348 manufactured by BYK-Chemie GmbH ("BYK" is a registered trademark of the company), and TSF 4452 manufactured by Toshiba Silicone Co., Ltd.

The content of the surfactant is preferably 0.001mass% or more and less than 1.0mass% based on the total mass of a primer.

### 1-1-5. Physical Properties

From the viewpoint of enhancing the ejectability from inkjet heads, the viscosity of the component-adjusted gel ink at 80°C is preferably 3 mPa·s or more and 20 mPa·s or less. From the viewpoint of allowing the ink to gel sufficiently when the temperature decreases to normal temperature after landing, the viscosity of the component-adjusted gel ink at 25°C is preferably 1,000 mPa·s or more.

The gelling temperature of the component-adjusted gel ink is preferably 40°C or more and less than 100°C. When the gelling temperature of the ink is 40°C or more, the ink rapidly gels after landing on a recording medium, and thus the pinning properties are further enhanced. When the gelling temperature of the ink is less than 100°C, it is possible to eject the ink that has undergone gellation by heating from inkjet heads to thereby enable the ink to be ejected in a more stable manner. From the viewpoint of enabling the ink to be ejected at a lower temperature and reducing the load on the image forming apparatus, the gelling temperature of the component-adjusted gel ink is preferably 40°C or more and less than 70°C.

The viscosity at 80°C, viscosity at 25°C, and gelling temperature of the component-adjusted gel ink can be determined by measuring temperature-dependent changes in dynamic viscoelasticity of the ink with a rheometer. In the present invention, the viscosities and gelling temperature are values obtained by the following method. The component-adjusted gel ink is heated to 100°C and then cooled to 20°C under conditions of a shear rate of 11.7 (1/s) and a temperature lowering rate of 0.1°C/s while the viscosity is measured with a stress-controlled rheometer Physica MCR 301 (cone plate diameter: 75 mm, cone angle: 1.0°) manufactured by Anton Paar GmbH, and thus a temperature-dependent viscosity change curve is obtained. The viscosity at 80°C and the viscosity at 25°C can be determined by reading the viscosity each at 80°C and 25°C on the temperature-dependent viscosity change curve. The gelling temperature can be determined as a temperature at which the viscosity reaches 200 mPa·s on the temperature-dependent viscosity change curve.

From the viewpoint of enhancing the ejectability from inkjet heads, when the component-adjusted gel ink contains a pigment, it is preferred that the average particle size of pigment particles be 0.08 µm or more and 0.5 µm or less and the maximum particle size be 0.3 µm or more and 10 µm or less. The average particle size of pigment particles of the present invention means a value determined by the dynamic light scattering method using Zetasizer Nano ZSP manufactured by Malvern Instruments Ltd. A colorant-containing ink is highly dense, and this measurement apparatus cannot transmit light through such an ink. Then, the measurement is performed after diluting the ink 200 times. The measurement temperature is set to normal temperature (25°C).

### 1-2. Landing Step

In the present step, droplets of the component-adjusted gel ink are ejected from a nozzle of an inkjet head and landed on a recording medium.

When droplets of a plurality of inks of which compositions (e.g., the type and amount of colorants) are different from one another are ejected and landed to form a multicolor image, at least one of the plurality of inkjet inks is a component-adjusted gel ink. From the viewpoint of further reducing occurrence of blooming and bend cracking, it is preferred that two or more inks among the inkjet inks to be ejected described above be component-adjusted gel inks (that droplets of a plurality of component-adjusted gel inks each having a different composition be ejected and landed on a recording medium). From the above viewpoint, it is more preferred that all the above inkjet inks to be ejected be component-adjusted gel inks.

The inkjet heads may be either of on-demand mode or continuous inkjet heads. Examples of the on-demand mode inkjet heads include electromechanical conversion-mode inkjet heads, such as single cavity-type, double cavity-type, bender-type, piston-type, shear mode-type, and shared wall-type, and electrothermal conversion-mode inkjet heads, such as thermal inkjet-type and Bubble Jet-type ("Bubble Jet" is a registered trademark of Canon Inc.).

The inkjet heads may be either of scan-type or line-type inkjet heads.

Recording media are only required to be media on which an image can be formed by an inkjet method, and examples thereof include absorbing media including coated papers such as art paper, coated paper, lightweight coated paper, fine coated paper, and cast paper and uncoated paper, non-absorbing recording media (plastic substrates) made of plastics including polyester, polyvinyl chloride, polyethylene, polyurethane, polypropylene, acrylic resin, polycarbonate, polystyrene, acrylonitrile-butadiene-styrene copolymers, polyethylene terephthalate, and polybutadiene terephthalate, and non-absorbing inorganic recording media such as metals and glass.

The thickness of the recording medium is not particularly limited. According to the method of the present invention, with a recording medium having a large thickness (e.g., a recording medium having a thickness of 0.6 mm or more or a recording medium having a thickness of 0.9 mm or more, or the like), it is possible to suitably suppress bend cracking and blooming.

### 1-3. Irradiating Step

In the present step, the component-adjusted gel ink landed is irradiated with actinic radiation in an atmosphere having an oxygen concentration of 0.1vol% or more and 10.0vol% or less to cure the ink. From the viewpoint of enhancing the curability of the component-adjusted gel ink, the ink is irradiated with actinic radiation preferably between 0.001 seconds or more and 2.0 seconds or less after the ink is landed, and from the viewpoint of forming a higher-definition image, more preferably between 0.001 seconds or more and 1.0 seconds or less.

Examples of the actinic radiation with which the ink can be irradiated in the present embodiment include electron beams, ultraviolet radiation, α rays, γ rays, and X rays. Of these, from the viewpoint of easy handling and less influence on human body, ultraviolet radiation is preferably directed. From the viewpoint of suppressing curing failure of inks due to melting of the component-adjusted gel inks with radiant heat from a light source, the light source is preferably a light-emitting diode (LED). Examples of the LED light sources that can direct actinic radiation to cure the component-adjusted gel inks include 395 nm water-cooled LEDs manufactured by Phoseon Technology, Heraeus, KYOCERA Corporation, HOYA CORPORATION, or Integration Technology Ltd.

The oxygen concentration is 0.1vol% or more and 10.0vol% or less. From the viewpoint of further reducing occurrence of blooming, the oxygen concentration is preferably 0.5vol% or more and 8.0vol% or less, more preferably 0.5vol% or more and 6.0vol% or less.

The light quantity of actinic radiation to be directed is preferably 200 mJ/cm² or more and 1,000 mJ/cm². When the light quantity is 200 mJ/cm² or more, the photocurable compound is sufficiently polymerized and crosslinked to thereby enable the hardness of the cured film to sufficiently increase. When the light quantity is 1,000 mJ/cm² or less, the pinning properties are less likely to be reduced by redissolution of the gelling agent due to heat of the light to be directed, and the crosslinked structure does not become excessively dense. Thus, bend cracking is less likely to occur. From the above viewpoint, the light quantity of actinic radiation to be directed is preferably 350 mJ/cm² or more and 800 mJ/cm² or less, more preferably 450 mJ/cm² or more and 600 mJ/cm² or less.

From the viewpoint of further reducing occurrence of blooming, the temperature of the recording medium when irradiated with actinic radiation is preferably 40°C or less, more preferably 35°C or less, still more preferably 25°C or less. When the surface temperature of the recording medium is low, it is conceived that gelling agent is less likely to move to the surface of the cured film because the amount of kinetic energy of the gelling agent decreases. Additionally, when the surface temperature of the recording medium is low, droplets of the ink landed on the recording medium are rapidly cooled. Thus, it is conceived that the components are unlikely to move in the gelled ink because the crystal size of the gelling agent becomes smaller to thereby enable a rigid card house structure to be formed. The effect caused by lowering the temperature of the recording medium is markedly observed particularly in a recording medium having a large thickness (e.g., a recording medium having a thickness of 0.6 mm or more). As described above, in the case of a recording medium having a large thickness, the polymerization heat generated when the droplets of the ink are polymerized is likely to accumulate in the recording medium, and thus blooming is particularly likely to occur. However, it is conceived that the effect is observed because blooming is sufficiently suppressed by the method of the present invention.

### 2. Image Forming Apparatus

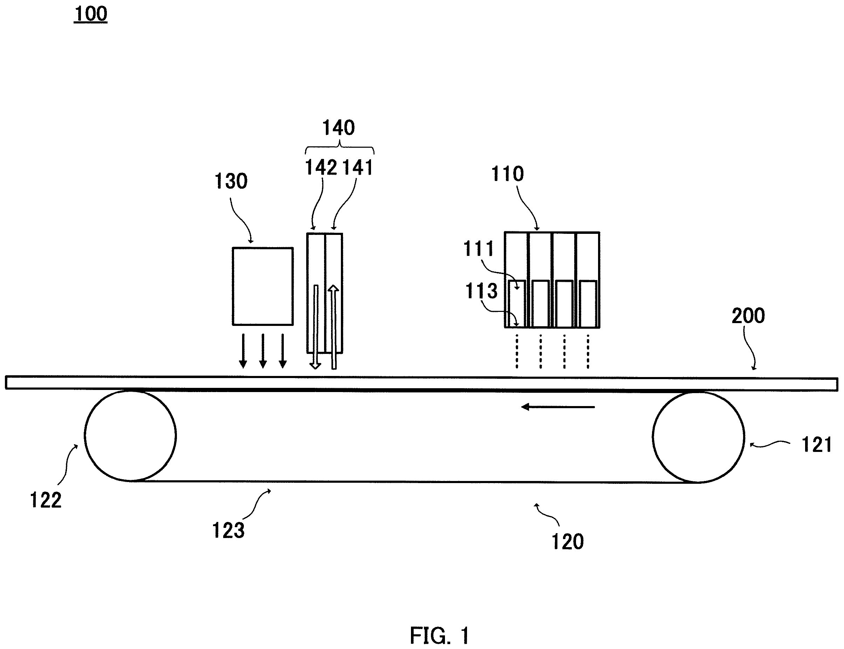

Another embodiment of the present invention relates to an inkjet image forming apparatus with which the method described above can be implemented. FIGS. 1 to 3 are side views showing the concept of inkjet image forming apparatus 100 according to the present embodiment.

As shown in FIGS. 1 to 3, image forming apparatus 100 has inkjet head 110, conveying section 120, irradiation section 130, and oxygen concentration adjusting section 140. In FIGS. 1 to 3, arrows show the conveyance direction of a recording medium.

### 2-1. Inkjet Head 110

Inkjet head 110 has nozzle faces 113, on each of which an ejection port of each of nozzles 111 is provided, on a face opposed to conveying section 120 when an image is formed, ejecting inks onto recording medium 200 to be conveyed by conveying section 120. From the viewpoint of enhancing the ejectability by solating the inks of the present invention, inkjet head 110 may have a temperature adjusting section to adjust the temperature of inks to thereby adjust the viscosity of the inks at a lower value. Examples of the temperature adjusting section include a panel heater, a ribbon heater, and a heating section by means of hot water.

Inkjet head 110 may be a scan-type inkjet head in which the width of the direction orthogonally intersecting with the conveying direction for recording medium is smaller than that of recording medium 200 or may be a line-type inkjet head in which the width of the direction orthogonally intersecting with the conveying direction for recording medium is larger than that of recording medium 200.

Nozzles 111 each has an ejection port on nozzle face 113. The number of nozzles 111 is only required to be equal to or more than the number of inks to be used for image formation (e.g., 4). When inkjet head 110 has a plurality of nozzles 111, from the viewpoint of simplifying the configuration of the apparatus for easier control, it is preferred that the plurality of nozzles 111 be disposed side by side in the conveying direction for recording medium at substantially equal intervals.

Inkjet head 110 is configured to be capable of changing the amount of ink(s) to be ejected and landed on a recording medium. For example, inkjet head 110 is configured to be capable of changing the amplitude width of a piezoelectric element or of preventing some of nozzles from ejecting ink, under control of the control section.

### 2-2. Conveying Section 120

Conveying section 120 conveys recording medium 200, when an image is formed, so as to move recording medium 200 opposite to inkjet head 110, directly under the vertical direction of inkjet head 110. Conveying section 120 has driving roller 121 and driven roller 122, and conveying belt 123, for example.

Driving roller 121 and driven roller 122 are disposed so as to extend in the direction orthogonally intersecting with the conveying direction for recording medium while a predetermined interval is provided therebetween in the conveying direction for recording medium. Driving roller 121 is rotated by a driving source, not shown.

Conveying belt 123, which is a belt for conveying recording medium 200 placed thereon, is stretched over driving roller 121 and driven roller 122. Conveying belt 123 can be an endless belt formed wider than recording medium 200, for example. At this time, when the driving source rotates driving roller 121, conveying belt 123 orbits following driving roller 121 to convey recording medium 200 on conveying belt 123. From the viewpoint that recording medium 200 is adsorbed and held to make the recording medium less likely to be detached, a plurality of suction holes (not shown) may be formed in the belt face of conveying belt 123.

### 2-3. Irradiation Section 130

Irradiation section 130, having a light source, irradiates the upper face of conveying section 120 (the face on which the ink has been landed) with actinic radiation from the light source. Thereby droplets of the inkjet ink landed on recording medium 200 to be conveyed are irradiated with actinic radiation to enable the droplets to be cured. Irradiation section 130 can be disposed directly on conveying section 120 in the downstream side of inkjet head 110. From the viewpoint of suppressing occurrence of curing failure of the ink due to melting of the inkjet ink with radiant heat from a light source, the light source is preferably a light-emitting diode (LED). Examples of LED light sources that can direct actinic radiation to cure the inkjet ink include 395 nm water-cooled LEDs manufactured by Phoseon Technology.

### 2-4. Oxygen Concentration Adjusting Section 140

Oxygen concentration adjusting section 140 adjusts the oxygen concentration of the atmosphere surrounding the surface of a recording medium on which the ink is landed when irradiated with actinic radiation by irradiation section 130.

The configuration of oxygen concentration adjusting section 140 is not particularly limited so long as the section can set the oxygen concentration of the above atmosphere at 0.1 vol% or more and 10.0vol% or less.

For example, as shown in FIG. 1, it is possible to configure oxygen concentration adjusting section 140 to include exhaust pipe 141 that is connected to an external exhaust apparatus or the like to thereby be capable of absorbing and exhausting the gas in the vicinity of the surface of a recording medium, and supply pipe 142 provided in the downstream side of exhaust pipe 141, which supply pipe 142 is connected to an apparatus that generates a gas having a low oxygen concentration, such as a nitrogen gas generator, to thereby be capable of supplying a gas having a low oxygen concentration in the vicinity of the surface of the recording medium. In this case, the amount to be exhausted from exhaust pipe 141 and the amount of gas to be supplied from supply pipe 142 can be adjusted to thereby set the oxygen concentration of the above atmosphere at 0.1 vol% or more and 10.0vol% or less. Although exhaust pipe 141 is continuous with supply pipe 142 in FIG. 1, both the pipes may be separated from each other so long as the oxygen concentration can be adjusted. Supply pipe 142 is preferably positioned in the vicinity of irradiation section 130, and may be provided continuously with irradiation section 130, for example.

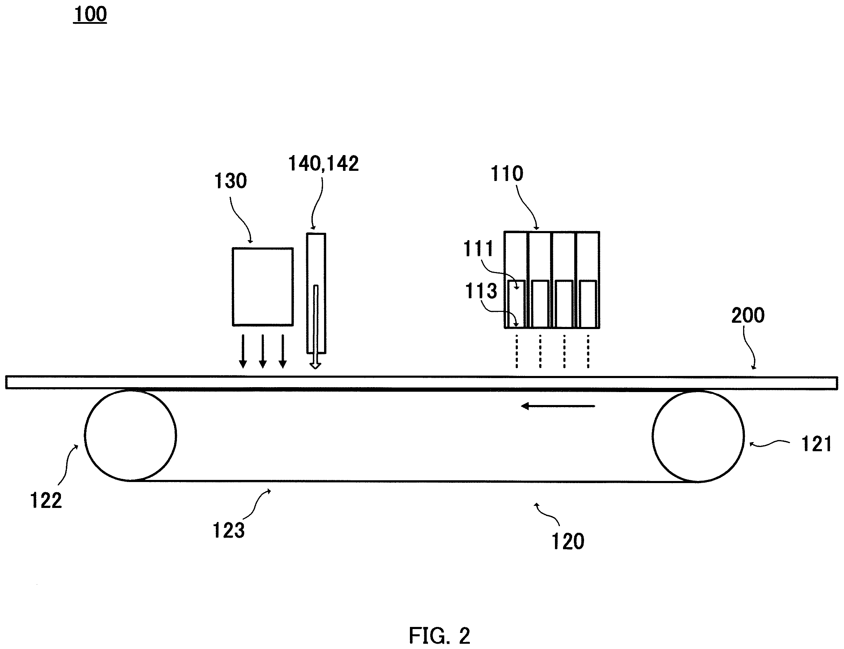

As shown in FIG. 2, oxygen concentration adjusting section 140 may be configured to have only supply pipe 142 without exhaust pipe 141 so long as the section can set the oxygen concentration of the above atmosphere at 0.1 vol% or more and 10.0vol% or less.

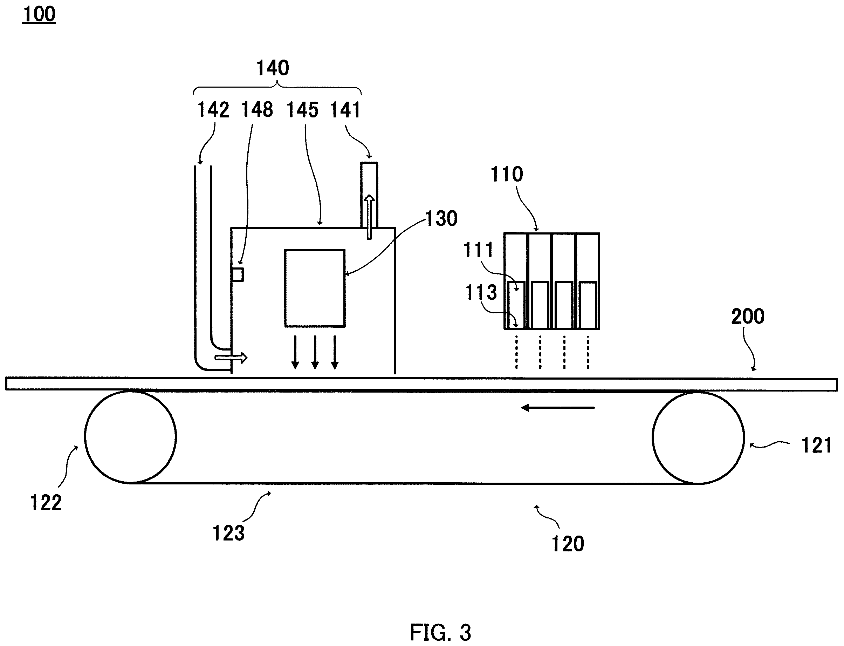

As shown in FIG. 3, oxygen concentration adjusting section 140 may be configured to include partition wall 145 that encloses irradiation section 130 and conveying section 120. In this case, the amount to be exhausted from exhaust pipe 141 and the amount of gas to be supplied from supply pipe 142 can be adjusted to thereby set the oxygen concentration in the space partitioned by partition wall 145 and conveying section 120 at 0.1 vol% or more and 10.0vol% or less. At this time, oxygen concentration measuring device 148 may be provided in the space described above (e.g. on partition wall 145) to adjust the amount to be exhausted and the amount to be supplied while measuring the oxygen concentration in the space.

### 2-5. Other Components

In addition to the components described above, image forming apparatus 100 may have an ink tank (not shown) that stores an inkjet ink before ejection, an ink flow path (not shown) that connects the ink tank with inkjet head 110 so as to allow an ink to flow therebetween, and a control section (not shown) that controls operation of inkjet head 110, conveying section 120, irradiation section 130, and oxygen concentration adjusting section 140.

### 2-6. Image Formation Employing Image Forming Apparatus 100

Conveying section 120 drives conveying belt 123 by means of driving roller 121 to move recording medium 200 on conveying belt 123 in the direction of the arrow in the figure.

Inkjet head 110 ejects droplets of an inkjet ink of a color corresponding to an image to be formed and lands the droplets on the site where the image is to be formed on recording medium 200 that has moved to the site. When a plurality of inkjet inks of which compositions (e.g., the type and amount of colorants) are different from one another is ejected and landed, at least one of the plurality of inkjet inks is a component-adjusted gel ink. From the viewpoint of further reducing occurrence of blooming and bend cracking, two or more inks among the inkjet inks to be ejected described above are preferably component-adjusted gel inks, and more preferably, all the inks are component-adjusted gel inks.

Oxygen concentration adjusting section 140 adjusts the oxygen concentration such that the oxygen concentration of the atmosphere at least between conveying belt 123 and irradiation section 130 reaches 0.1vol% or more and 10.0vol% or less.

The recording medium on which the droplets of the inkjet ink ejected from inkjet head 110 are landed is moved to the space having an oxygen concentration in the above range and then irradiated with actinic radiation from irradiation section 130. In this manner, a desired image is formed on the recording medium.

### Examples

Hereinafter, the present invention will be described specifically by way of examples, but the present invention is not construed to be limited by these Examples.

### 1. Preparation of Ink

### 1-1. Preparation of Pigment Dispersion Liquid

In a stainless beaker, 9 parts by weight of a dispersant and 71 parts by weight of a polyfunctional radical polymerizable compound were placed, and heated, stirred, and dissolved for an hour while heated on a hot plate at 65°C. To the solution described above cooled to room temperature, 20 parts by weight of a pigment were added. The mixture, along with 200 g of zirconia beads having a diameter of 0.5 mm, was placed in a glass jar, which was then hermetically sealed. The mixture was dispersion-treated by means of a paint shaker until a desired particle diameter was achieved. After the dispersion treatment, the zirconia beads were removed. A cyan pigment dispersion, a magenta pigment dispersion, a yellow pigment dispersion, and a black pigment dispersion were each prepared.

The pigment dispersion liquids were prepared using the following materials.

### (Dispersant)

efka 7701 manufactured by BASF SE ("efka" is a registered trademark of the company.)

### (Polyfunctional radical polymerizable compound)

Tripropylene glycol diacrylate (containing a polymerization inhibitor of 0.2%)

### (Cyan pigment)

C.I.Pigment Blue 15:4 (manufactured by Dainichiseika Color & Chemicals Mfg. Co., Ltd., CHROMOFINE BLUE 6332JC ("CHROMOFINE" is a registered trademark of the company.))

### (Magenta pigment)

Mixed crystals of C.I.Pigment Violet 19 and C.I.Pigment Red 202 (manufactured by BASF SE, CINQUASIA Magenta RT-355D ("CINQUASIA" is a registered trademark of the company.))

### (Yellow pigment)

C.I.Pigment Yellow 185 (manufactured by BASF SE, D1155)

### (Black pigment)

C.I.Pigment Black 7 (manufactured by Mitsubishi Chemical Corporation, #52)

The time required for the dispersion treatment by means of a paint shaker was four hours for preparation of the cyan pigment dispersion, six hours for preparation of the magenta pigment dispersion, six hours for preparation of the yellow pigment dispersion, and four hours for preparation of the black pigment dispersion.

### 1-2. Preparation of Inks

The following components and each of the pigment dispersion liquids were mixed in accordance with ink composition listed in the following Tables 1 to 13, and the each mixture was heated to 80°C and stirred. The solutions obtained each were filtered with a Teflon (registered trademark) 3 µm membrane filter manufactured by Advantec Toyo Kaisha, Ltd. under heating to prepare each of a yellow ink, a magenta ink, a cyan ink, and a black ink, which constitute Ink sets 1 to 13.

In Tables 1 to 13, the numerical value in each of the "C" columns represents the content of the cyan ink, the numerical value in each of the "M" columns represents the content of the magenta ink, the numerical value in each of the "Y" columns represents the content of the yellow ink, and the numerical value in each of the "K" columns represents the content of the black ink (all the values are in mass%).

Additionally, in Tables 1 to 13, the numerical value in each of the "(A)/(B)" columns represents the ratio of the mass of a component A based on the total mass of a component B, and the numerical value in each of the "proportion of trifunctional or higher functional radical polymerizable compound" columns represents the proportion of the mass of a trifunctional or higher functional radical polymerizable compound based on the total mass of the inkjet ink (the values are in mass%).

### (Materials for inks)

Pigment dispersion Y: the yellow pigment dispersion prepared as described above
Pigment dispersion M: the magenta pigment dispersion prepared as described above
Pigment dispersion C: the cyan pigment dispersion prepared as described above
Pigment dispersion K: the black pigment dispersion prepared as described above
Photopolymerization initiator 1: an acyl phosphine oxide radical polymerization initiator (manufactured by BASF SE, IRGACURE819 ("IRGACURE" is a registered trademark of the company.), molecular weight: 418)
Photopolymerization initiator 2: an acyl phosphine oxide radical polymerization initiator (manufactured by BASF SE, IRGACURE 369, molecular weight: 367)
Photocurable compound 1: tripropylene glycol diacrylate (a bifunctional radical polymerizable compound)
Photocurable compound 2: polyethylene glycol #600 diacrylate (a bifunctional radical polymerizable compound)
Photocurable compound 3: 3 EO-modified trimethylolpropane triacrylate (a trifunctional radical polymerizable compound)
Photocurable compound 4: 3 PO-modified trimethylolpropane triacrylate (a trifunctional radical polymerizable compound)
Photocurable compound 5: 6 EO-modified pentaerythritol tetraacrylate (a tetrafunctional radical polymerizable compound)
Photocurable compound 6: ditrimethylolpropane tetraacrylate (a tetrafunctional radical polymerizable compound)
Photocurable compound 7: isobornyl acrylate (a monofunctional radical polymerizable compound)
Gelling agent 1: a non-polymerizable gelling agent having a linear alkyl group containing 12 or more and 25 or less carbon atoms (distearyl ketone: manufactured by Kao Corporation, Kao Wax T1)
Gelling agent 2: a non-polymerizable gelling agent having a linear alkyl group containing 12 or more and 25 or less carbon atoms (behenyl stearate: manufactured by NOF Corporation, WE11)
Gelling agent 3: a non-polymerizable gelling agent having a linear alkyl group containing 26 or more carbon atoms (an aliphatic alcohol having 30 or more carbon atoms: manufactured by Baker Petrolite Corporation, UNILIN350 ("UNILIN" is a registered trademark of Baker Petrolite Corporation.))
Gelling agent 4: a polymerizable gelling agent obtained by reacting gelling agent 3 with acrylic acid
Gelling agent 5: a polymerizable gelling agent having a linear alkyl group containing 12 or more and 25 or less carbon atoms (behenyl acrylate: NOF Corporation, BLEMMER VA)
Polymerization inhibitor: manufactured by BASF SE, IRGASTAB UV10 ("IRGASTAB" is a registered trademark of the company.)
Surfactant: a silicone surfactant (Shin-Etsu Chemical Co., Ltd., KF352)

### [Table 1]

**Table 1: Composition of Ink set 1**

| Ink set 1 | | | C | M | Y | K |
|---|---|---|---|---|---|---|
| Pigment dispersion | | Cyan dispersion | 12.5 | | | |
| | | Magenta dispersion | | 21.0 | | |
| | | Yellow dispersion | | | 15.0 | |
| | | Black dispersion | | | | 15.0 |
| Radical polymerization initiator (A) | Molecular weight: 350 or more | Photopolymerization initiator 1 | 2.0 | 2.0 | 3.0 | 3.0 |
| | Molecular weight: less than 350 | Photopolymerization initiator 2 | 2.0 | 2.0 | 1.0 | 1.0 |
| Polyfunctional radical polymerizable compound (B) | Bifunctional | Photocurable compound 1 | 20.0 | 20.0 | 20.0 | 20.0 |
| | | Photocurable compound 2 | 20.0 | 20.0 | 20.0 | 20.0 |
| | Trifunctional | Photocurable compound 3 | 11.6 | 3.1 | 6.1 | 6.1 |
| | | Photocurable compound 4 | 15.0 | 15.0 | 15.0 | 15.0 |
| | Tetrafunctional | Photocurable compound 5 | 8.0 | 8.0 | 8.0 | 8.0 |
| | | Photocurable compound 6 | 2.0 | 2.0 | 5.0 | 5.0 |
| Monofunctional radical polymerizable compound | | Photocurable compound 7 | 5.0 | 5.0 | 5.0 | 5.0 |
| Gelling agent | Non-polymerizable gelling agent | Gelling agent 1 | 1.0 | 1.0 | 1.0 | 1.0 |
| | | Gelling agent 2 | 0.8 | 0.8 | 0.8 | 0.8 |
| Polymerization inhibitor | | Polymerization inhibitor | 0.1 | 0.1 | 0.1 | 0.1 |
| Surfactant | | Surfactant | 0.05 | 0.05 | 0.05 | 0.05 |
| (A)/(B) | | | 0.047 | 0.048 | 0.047 | 0.047 |
| Proportion of trifunctional or higher functional radical polymerizable compound (mass%) | | | 36.6 | 28.1 | 34.1 | 34.1 |

### [Table 2]

**Table 2: Composition of Ink set 2**

| Ink set 2 | | | C | M | Y | K |
|---|---|---|---|---|---|---|
| Pigment dispersion | | Cyan dispersion | 12.5 | | | |
| | | Magenta dispersion | | 21.0 | | |
| | | Yellow dispersion | | | 15.0 | |
| | | Black dispersion | | | | 15.0 |
| Radical polymerization initiator (A) | Molecular weight: 350 or more | Photopolymerization initiator 1 | 2.0 | 2.0 | 3.0 | 3.0 |
| | Molecular weight: less than 350 | Photopolymerization initiator 2 | 2.0 | 2.0 | 1.0 | 1.0 |
| Polyfunctional radical polymerizable compound (B) | Bifunctional | Photocurable compound 1 | 20.0 | 20.0 | 20.0 | 20.0 |
| | | Photocurable compound 2 | 22.0 | 22.0 | 22.0 | 22.0 |
| | Trifunctional | Photocurable compound 3 | 14.6 | 6.1 | 9.1 | 9.1 |
| | | Photocurable compound 4 | 15.0 | 15.0 | 15.0 | 15.0 |
| | Tetrafunctional | Photocurable compound 5 | 8.0 | 8.0 | 8.0 | 8.0 |
| | | Photocurable compound 6 | 2.0 | 2.0 | 5.0 | 5.0 |
| Gelling agent | Non-polymerizable gelling agent | Gelling agent 1 | 1.0 | 1.0 | 1.0 | 1.0 |
| | | Gelling agent 2 | 0.8 | 0.8 | 0.8 | 0.8 |
| Polymerization inhibitor | | Polymerization inhibitor | 0.1 | 0.1 | 0.1 | 0.1 |
| Surfactant | | Surfactant | 0.05 | 0.05 | 0.05 | 0.05 |
| (A)/(B) | | | 0.044 | 0.045 | 0.045 | 0.045 |
| Proportion of trifunctional or higher functional radical polymerizable compound (mass%) | | | 39.6 | 31.1 | 37.1 | 37.1 |

### [Table 3]

**Table 3: Composition of Ink set 3**

| Ink set 3 | | | C | M | Y | K |
|---|---|---|---|---|---|---|
| Pigment dispersion | | Cyan dispersion | 12.5 | | | |
| | | Magenta dispersion | | 21.0 | | |
| | | Yellow dispersion | | | 15.0 | |
| | | Black dispersion | | | | 15.0 |
| Radical polymerization initiator (A) | Molecular weight: 350 or more | Photopolymerization initiator 1 | 2.0 | 2.0 | 3.0 | 3.0 |
| | Molecular weight: less than 350 | Photopolymerization initiator 2 | 2.0 | 2.0 | 1.0 | 1.0 |
| Polyfunctional radical polymerizable compound (B)) | Bifunctional | Photocurable compound 1 | 12.0 | 12.0 | 12.0 | 12.0 |
| | | Photocurable compound 2 | 20.0 | 20.0 | 20.0 | 20.0 |
| | Trifunctional | Photocurable compound 3 | 19.6 | 11.1 | 14.1 | 14.1 |
| | | Photocurable compound 4 | 20.0 | 20.0 | 20.0 | 20.0 |
| | Tetrafunctional | Photocurable compound 5 | 8.0 | 8.0 | 8.0 | 8.0 |
| | | Photocurable compound 6 | 2.0 | 2.0 | 5.0 | 5.0 |
| Gelling agent | Non-polymerizable gelling agent | Gelling agent 1 | 1.0 | 1.0 | 1.0 | 1.0 |
| | | Gelling agent 2 | 0.8 | 0.8 | 0.8 | 0.8 |
| Polymerization inhibitor | | Polymerization inhibitor | 0.1 | 0.1 | 0.1 | 0.1 |
| Surfactant | | Surfactant | 0.05 | 0.05 | 0.05 | 0.05 |
| (A)/(B) | | | 0.044 | 0.045 | 0.045 | 0.045 |
| Proportion of trifunctional or higher functional radical polymerizable compound (mass%) | | | 49.6 | 41.1 | 47.1 | 47.1 |

### [Table 4]

**Table 4: Composition of Ink set 4**

| Ink set 4 | | | C | M | Y | K |
|---|---|---|---|---|---|---|
| Pigment dispersion | | Cyan dispersion | 12.5 | | | |
| | | Magenta dispersion | | 21.0 | | |
| | | Yellow dispersion | | | 15.0 | |
| | | Black dispersion | | | | 15.0 |
| Radical polymerization initiator (A) | Molecular weight: 350 or more | Photopolymerization initiator 1 | 4.0 | 4.0 | 4.0 | 4.0 |
| Polyfunctional radical polymerizable compound (B)) | Bifunctional | Photocurable compound 1 | 20.0 | 20.0 | 20.0 | 20.0 |
| | | Photocurable compound 2 | 22.0 | 22.0 | 22.0 | 22.0 |
| | Trifunctional | Photocurable compound 3 | 14.6 | 6.1 | 9.1 | 9.1 |
| | | Photocurable compound 4 | 15.0 | 15.0 | 15.0 | 15.0 |
| | Tetrafunctional | Photocurable compound 5 | 8.0 | 8.0 | 8.0 | 8.0 |
| | | Photocurable compound 6 | 2.0 | 2.0 | 5.0 | 5.0 |
| Gelling agent | Non-polymerizable gelling agent | Gelling agent 1 | 1.0 | 1.0 | 1.0 | 1.0 |
| | | Gelling agent 2 | 0.8 | 0.8 | 0.8 | 0.8 |
| Polymerization inhibitor | | Polymerization inhibitor | 0.1 | 0.1 | 0.1 | 0.1 |
| Surfactant | | Surfactant | 0.05 | 0.05 | 0.05 | 0.05 |
| (A)/(B) | | | 0.044 | 0.045 | 0.045 | 0.045 |
| Proportion of trifunctional or higher functional radical polymerizable compound (mass%) | | | 39.6 | 31.1 | 37.1 | 37.1 |

### [Table 5]

**Table 5: Composition of Ink set 5**

| Ink set 5 | | | C | M | Y | K |
|---|---|---|---|---|---|---|
| Pigment dispersion | | Cyan dispersion | 12.5 | | | |
| | | Magenta dispersion | | 21.0 | | |
| | | Yellow dispersion | | | 15.0 | |
| | | Black dispersion | | | | 15.0 |
| Radical polymerization initiator (A) | Molecular weight: 350 or more | Photopolymerization initiator 1 | 2.0 | 2.0 | 3.0 | 3.0 |
| Polyfunctional radical polymerizable compound (B) | Bifunctional | Photocurable compound 1 | 12.0 | 12.0 | 12.0 | 12.0 |
| | | Photocurable compound 2 | 20.0 | 20.0 | 20.0 | 20.0 |
| | Trifunctional | Photocurable compound 3 | 21.6 | 13.1 | 15.1 | 15.1 |
| | | Photocurable compound 4 | 20.0 | 20.0 | 20.0 | 20.0 |
| | Tetrafunctional | Photocurable compound 5 | 8.0 | 8.0 | 8.0 | 8.0 |
| | | Photocurable compound 6 | 2.0 | 2.0 | 5.0 | 5.0 |
| Gelling agent | Non-polymerizable gelling agent | Gelling agent 1 | 1.0 | 1.0 | 1.0 | 1.0 |
| | | Gelling agent 2 | 0.8 | 0.8 | 0.8 | 0.8 |
| Polymerization inhibitor | | Polymerization inhibitor | 0.1 | 0.1 | 0.1 | 0.1 |
| Surfactant | | Surfactant | 0.05 | 0.05 | 0.05 | 0.05 |
| (A)/(B) | | | 0.022 | 0.022 | 0.033 | 0.033 |
| Proportion of trifunctional or higher functional radical polymerizable compound (mass%) | | | 51.6 | 43.1 | 48.1 | 48.1 |

### [Table 6]

**Table 6: Composition of Ink set 6**

| Ink set 6 | | | C | M | Y | K |
|---|---|---|---|---|---|---|
| Pigment dispersion | | Cyan dispersion | 12.5 | | | |
| | | Magenta dispersion | | 21.0 | | |
| | | Yellow dispersion | | | 15.0 | |
| | | Black dispersion | | | | 15.0 |
| Radical polymerization initiator (A) | Molecular weight: 350 or more | Photopolymerization initiator 1 | 1.0 | 1.0 | 1.0 | 1.0 |
| Polyfunctional radical polymerizable compound (B) | Bifunctional | Photocurable compound 1 | 12.0 | 12.0 | 12.0 | 12.0 |
| | | Photocurable compound 2 | 20.0 | 20.0 | 20.0 | 20.0 |
| | Trifunctional | Photocurable compound 3 | 22.6 | 14.1 | 17.1 | 17.1 |
| | | Photocurable compound 4 | 20.0 | 20.0 | 20.0 | 20.0 |
| | Tetrafunctional | Photocurable compound 5 | 8.0 | 8.0 | 8.0 | 8.0 |
| | | Photocurable compound 6 | 2.0 | 2.0 | 5.0 | 5.0 |
| Gelling agent | Non-polymerizable gelling agent | Gelling agent 1 | 1.0 | 1.0 | 1.0 | 1.0 |
| | | Gelling agent 2 | 0.8 | 0.8 | 0.8 | 0.8 |
| Polymerization inhibitor | | Polymerization inhibitor | 0.1 | 0.1 | 0.1 | 0.1 |
| Surfactant | | Surfactant | 0.05 | 0.05 | 0.05 | 0.05 |
| (A)/(B) | | | 0.011 | 0.011 | 0.011 | 0.011 |
| Proportion of trifunctional or higher functional radical polymerizable compound (mass%) | | | 52.6 | 44.1 | 50.1 | 50.1 |

### [Table 7]

**Table 7: Composition of Ink set 7**

| Ink set 7 | | | C | M | Y | K |
|---|---|---|---|---|---|---|
| Pigment dispersion | | Cyan dispersion | 12.5 | | | |
| | | Magenta dispersion | | 21.0 | | |
| | | Yellow dispersion | | | 15.0 | |
| | | Black dispersion | | | | 15.0 |
| Radical polymerization initiator (A) | Molecular weight: 350 or more | Photopolymerization initiator 1 | 4.5 | 4.5 | 5.0 | 5.0 |
| Polyfunctional radical polymerizable compound (B) | Bifunctional | Photocurable compound 1 | 12.0 | 12.0 | 12.0 | 12.0 |
| | | Photocurable compound 2 | 20.0 | 20.0 | 20.0 | 20.0 |
| | Trifunctional | Photocurable compound 3 | 19.1 | 10.6 | 13.1 | 13.1 |
| | | Photocurable compound 4 | 20.0 | 20.0 | 20.0 | 20.0 |
| | Tetrafunctional | Photocurable compound 5 | 8.0 | 8.0 | 8.0 | 8.0 |
| | | Photocurable compound 6 | 2.0 | 2.0 | 5.0 | 5.0 |
| Gelling agent | Non-polymerizable gelling agent | Gelling agent 1 | 1.0 | 1.0 | 1.0 | 1.0 |
| | | Gelling agent 2 | 0.8 | 0.8 | 0.8 | 0.8 |
| Polymerization inhibitor | | Polymerization inhibitor | 0.1 | 0.1 | 0.1 | 0.1 |
| Surfactant | | Surfactant | 0.05 | 0.05 | 0.05 | 0.05 |
| (A)/(B) | | | 0.050 | 0.051 | 0.056 | 0.056 |
| Proportion of trifunctional or higher functional radical polymerizable compound (mass%) | | | 49.1 | 40.6 | 46.1 | 46.1 |

### [Table 8]

**Table 8: Composition of Ink set 8**

| Ink set 8 | | | C | M | Y | K |
|---|---|---|---|---|---|---|
| Pigment dispersion | | Cyan dispersion | 12.5 | | | |
| | | Magenta dispersion | | 21.0 | | |
| | | Yellow dispersion | | | 15.0 | |
| | | Black dispersion | | | | 15.0 |
| Radical polymerization initiator (A) | Molecular weight: 350 or more | Photopolymerization initiator 1 | 2.0 | 2.0 | 3.0 | 3.0 |
| Polyfunctional radical polymerizable compound (B) | Bifunctional | Photocurable compound 1 | 12.0 | 12.0 | 12.0 | 12.0 |
| | | Photocurable compound 2 | 20.0 | 20.0 | 20.0 | 20.0 |
| | Trifunctional | Photocurable compound 3 | 20.4 | 11.9 | 13.9 | 13.9 |
| | | Photocurable compound 4 | 20.0 | 20.0 | 20.0 | 20.0 |
| | Tetrafunctional | Photocurable compound 5 | 8.0 | 8.0 | 8.0 | 8.0 |
| | | Photocurable compound 6 | 2.0 | 2.0 | 5.0 | 5.0 |
| Gelling agent | Non-polymerizable gelling agent | Gelling agent 3 | 3.0 | 3.0 | 3.0 | 3.0 |
| Polymerization inhibitor | | Polymerization inhibitor | 0.1 | 0.1 | 0.1 | 0.1 |
| Surfactant | | Surfactant | 0.05 | 0.05 | 0.05 | 0.05 |
| (A)/(B) | | | 0.022 | 0.023 | 0.034 | 0.034 |
| Proportion of trifunctional or higher functional radical polymerizable compound (mass%) | | | 50.4 | 41.9 | 46.9 | 46.9 |

### [Table 9]

**Table 9: Composition of Ink set 9**

| Ink set 9 | | | C | M | Y | K |
|---|---|---|---|---|---|---|
| Pigment dispersion | | Cyan dispersion | 12.5 | | | |
| | | Magenta dispersion | | 21.0 | | |
| | | Yellow dispersion | | | 15.0 | |
| | | Black dispersion | | | | 15.0 |
| Radical polymerization initiator (A) | Molecular weight: 350 or more | Photopolymerization initiator 1 | 2.0 | 2.0 | 3.0 | 3.0 |
| Polyfunctional radical polymerizable compound (B) | Bifunctional | Photocurable compound 1 | 12.0 | 12.0 | 12.0 | 12.0 |
| | | Photocurable compound 2 | 20.0 | 20.0 | 20.0 | 20.0 |
| | Trifunctional | Photocurable compound 3 | 20.4 | 11.9 | 13.9 | 13.9 |
| | | Photocurable compound 4 | 20.0 | 20.0 | 20.0 | 20.0 |
| | Tetrafunctional | Photocurable compound 5 | 8.0 | 8.0 | 8.0 | 8.0 |
| | | Photocurable compound 6 | 2.0 | 2.0 | 5.0 | 5.0 |
| Gelling agent | Polymerizable gelling agent | Gelling agent 4 | 3.0 | 3.0 | 3.0 | 3.0 |
| Polymerization inhibitor | | Polymerization inhibitor | 0.1 | 0.1 | 0.1 | 0.1 |
| Surfactant | | Surfactant | 0.05 | 0.05 | 0.05 | 0.05 |
| (A)/(B) | | | 0.022 | 0.023 | 0.034 | 0.034 |
| Proportion of trifunctional or higher functional radical polymerizable compound (mass%) | | | 50.4 | 41.9 | 46.9 | 46.9 |

### [Table 10]

**Table 10: Composition of Ink set 10**

| Ink set 10 | | | C | M | Y | K |
|---|---|---|---|---|---|---|
| Pigment dispersion | | Cyan dispersion | 12.5 | | | |
| | | Magenta dispersion | | 21.0 | | |
| | | Yellow dispersion | | | 15.0 | |
| | | Black dispersion | | | | 15.0 |
| Radical polymerization initiator (A) | Molecular weight: 350 or more | Photopolymerization initiator 1 | 2.0 | 2.0 | 3.0 | 3.0 |
| Polyfunctional radical polymerizable compound (B) | Bifunctional | Photocurable compound 1 | 12.0 | 12.0 | 12.0 | 12.0 |
| | | Photocurable compound 2 | 20.0 | 20.0 | 20.0 | 20.0 |
| | Trifunctional | Photocurable compound 3 | 20.4 | 11.9 | 13.9 | 13.9 |
| | | Photocurable compound 4 | 20.0 | 20.0 | 20.0 | 20.0 |
| | Tetrafunctional | Photocurable compound 5 | 8.0 | 8.0 | 8.0 | 8.0 |
| | | Photocurable compound 6 | 2.0 | 2.0 | 5.0 | 5.0 |
| Gelling agent | Polymerizable gelling agent | Gelling agent 5 | 3.0 | 3.0 | 3.0 | 3.0 |
| Polymerization inhibitor | | Polymerization inhibitor | 0.1 | 0.1 | 0.1 | 0.1 |
| Surfactant | | Surfactant | 0.05 | 0.05 | 0.05 | 0.05 |
| (A)/(B) | | | 0.022 | 0.023 | 0.034 | 0.034 |
| Proportion of trifunctional or higher functional radical polymerizable compound (mass%) | | | 50.4 | 41.9 | 46.9 | 46.9 |

### [Table 11]

**Table 11: Composition of Ink set 11**

| Ink set 11 | | | C | M | Y | K |
|---|---|---|---|---|---|---|
| Pigment dispersion | | Cyan dispersion | 12.5 | | | |
| | | Magenta dispersion | | 21.0 | | |
| | | Yellow dispersion | | | 15.0 | |
| | | Black dispersion | | | | 15.0 |
| Radical polymerization initiator (A) | Molecular weight: 350 or more | Photopolymerization initiator 1 | 0.5 | 0.5 | 0.7 | 0.7 |
| Polyfunctional radical polymerizable compound (B) | Bifunctional | Photocurable compound 1 | 12.0 | 12.0 | 12.0 | 12.0 |
| | | Photocurable compound 2 | 20.0 | 20.0 | 20.0 | 20.0 |
| | Trifunctional | Photocurable compound 3 | 23.1 | 14.6 | 17.4 | 17.4 |
| | | Photocurable compound 4 | 20.0 | 20.0 | 20.0 | 20.0 |
| | Tetrafunctional | Photocurable compound 5 | 8.0 | 8.0 | 8.0 | 8.0 |
| | | Photocurable compound 6 | 2.0 | 2.0 | 5.0 | 5.0 |
| Gelling agent | Non-polymerizable gelling agent | Gelling agent 1 | 1.0 | 1.0 | 1.0 | 1.0 |
| | | Gelling agent 2 | 0.8 | 0.8 | 0.8 | 0.8 |
| Polymerization inhibitor | | Polymerization inhibitor | 0.1 | 0.1 | 0.1 | 0.1 |
| Surfactant | | Surfactant | 0.05 | 0.05 | 0.05 | 0.05 |
| (A)/(B) | | | 0.005 | 0.005 | 0.008 | 0.008 |
| Proportion of trifunctional or higher functional radical polymerizable compound (mass%) | | | 53.1 | 44.6 | 50.4 | 50.4 |

### [Table 12]

**Table 12: Composition of Ink set 12**

| Ink set 12 | | | C | M | Y | K |
|---|---|---|---|---|---|---|
| Pigment dispersion | | Cyan dispersion | 12.5 | | | |
| | | Magenta dispersion | | 21.0 | | |
| | | Yellow dispersion | | | 15.0 | |
| | | Black dispersion | | | | 15.0 |
| Radical polymerization initiator (A) | Molecular weight: 350 or more | Photopolymerization initiator 1 | 7.0 | 7.0 | 8.0 | 8.0 |
| Polyfunctional radical polymerizable compound (B) | Bifunctional | Photocurable compound 1 | 12.0 | 12.0 | 12.0 | 12.0 |
| | | Photocurable compound 2 | 20.0 | 20.0 | 20.0 | 20.0 |
| | Trifunctional | Photocurable compound 3 | 16.6 | 8.1 | 10.1 | 10.1 |
| | | Photocurable compound 4 | 20.0 | 20.0 | 20.0 | 20.0 |
| | Tetrafunctional | Photocurable compound 5 | 8.0 | 8.0 | 8.0 | 8.0 |
| | | Photocurable compound 6 | 2.0 | 2.0 | 5.0 | 5.0 |
| Gelling agent | Non-polymerizable gelling agent | Gelling agent 1 | 1.0 | 1.0 | 1.0 | 1.0 |
| | | Gelling agent 2 | 0.8 | 0.8 | 0.8 | 0.8 |
| Polymerization inhibitor | | Polymerization inhibitor | 0.1 | 0.1 | 0.1 | 0.1 |
| Surfactant | | Surfactant | 0.05 | 0.05 | 0.05 | 0.05 |
| (A)/(B) | | | 0.080 | 0.082 | 0.093 | 0.093 |
| Proportion of trifunctional or higher functional radical polymerizable compound (mass%) | | | 47.6 | 39.1 | 44.1 | 44.1 |

### [Table 13]

**Table 13: Composition of Ink set 13**

| Ink set 13 | | | C | M | Y | K |
|---|---|---|---|---|---|---|
| Pigment dispersion | | Cyan dispersion | 12.5 | | | |
| | | Magenta dispersion | | 21.0 | | |
| | | Yellow dispersion | | | 15.0 | |
| | | Black dispersion | | | | 15.0 |
| Radical polymerization initiator (A) | Molecular weight: 350 or more | Photopolymerization initiator 1 | 2.0 | 2.0 | 3.0 | 3.0 |
| Polyfunctional radical polymerizable compound (B) | Bifunctional | Photocurable compound 1 | 12.0 | 12.0 | 12.0 | 12.0 |
| | | Photocurable compound 2 | 20.0 | 20.0 | 20.0 | 20.0 |
| | Trifunctional | Photocurable compound 3 | 23.4 | 14.9 | 16.9 | 16.9 |
| | | Photocurable compound 4 | 20.0 | 20.0 | 20.0 | 20.0 |
| | Tetrafunctional | Photocurable compound 5 | 8.0 | 8.0 | 8.0 | 8.0 |
| | | Photocurable compound 6 | 2.0 | 2.0 | 5.0 | 5.0 |
| Polymerization inhibitor | | Polymerization inhibitor | 0.1 | 0.1 | 0.1 | 0.1 |
| Surfactant | | Surfactant | 0.05 | 0.05 | 0.05 | 0.05 |
| (A)/(B) | | | 0.021 | 0.022 | 0.032 | 0.032 |
| Proportion of trifunctional or higher functional radical polymerizable compound (mass%) | | | 53.4 | 44.9 | 49.9 | 49.9 |

### 2. Image Formation

An inkjet image forming apparatus including KM1800i manufactured by Konica Minolta, Inc. (number of nozzles: 1776) was filled with ink set 1. Under an environment of 23°C and 55% RH, a cyan ink, a magenta ink, a yellow ink, and a black ink were sequentially ejected onto an area having a length of 16 cm × a width of 4 cm set on the surface of the following recording medium 1 so as to achieve an amount of ink adhering of 9 g/m². Then, the area was irradiated with ultraviolet radiation having a peak wavelength of 385 nm and a peak irradiance of 8 W/cm² by an LED light source unit (manufactured by Heraeus k.k.) to form a solid image having a length of 4 cm × a width of 4 cm of each ink, resulting in image 1, in which solid images of the four colors were aligned in the area of 16 cm × 4 cm.

The oxygen concentration was adjusted by a configuration including only supply pipe 142 without exhaust pipe 141 (see FIG. 2). A gas supply nozzle was provided between the inkjet head and the light source, a nitrogen gas generator (manufactured by KOFLOC Co., LTD., N2 IMPACT) was connected to the nozzle at a pressure of 0.5 MPa·s, and nitrogen (N₂) gas was allowed to flow therethrough.

Images 2 to 22 were obtained in the same manner except that the ink set, oxygen concentration, temperature of the recording medium, and light quantity of ultraviolet radiation were changed as shown in Table 14. Image 22 was formed under air atmosphere without adjustment of the oxygen concentration. The oxygen concentration was adjusted by controlling the flow rate of nitrogen gas while the tip of the sensor of an oxygen concentration meter (manufactured by TAITEC CORPORATION, Fibox3) was placed between the LED light source unit and the recording medium to measure the oxygen concentration. The temperature of the recording medium was adjusted by heating the recording medium from its printing surface side with a temperature-controlling infrared heater. The light quantity of ultraviolet radiation was adjusted by controlling its peak irradiance while the light quantity was measured with an actinometer (manufactured by Hamamatsu Photonics K.K., UV Power Meter C9536).

### (Recording medium)

Sheet A: paper having a thickness: 0.195 mm (manufactured by Hokuetsu Kishu Paper Co., Ltd., Sunmat, basis weight: 186 g/m²)
Sheet B: paper having a thickness: 0.680 mm (manufactured by Hokuetsu Kishu Paper Co., Ltd., Maricoat, basis weight: 550 g/m²)
Sheet C: paper having a thickness: 1.200 mm (manufactured by Crown Package Co., Ltd., F flute)

Ink sets and image formation conditions used for forming images 1 to 22 were shown in Table 14.

### [Table 14]

**Table 14: Ink sets and image formation conditions**

| Image number | Ink set number | Recording conditions | | |
|---|---|---|---|---|
| | | Oxygen concentration | Recording media temperature | Light quantity |
| | | (volume%) | (°C) | (mJ/cm²) |
| 1 | 1 | 3 | 30 | 500 |
| 2 | 2 | 3 | 30 | 500 |
| 3 | 3 | 3 | 30 | 500 |
| 4 | 4 | 3 | 30 | 500 |
| 5 | 5 | 3 | 30 | 500 |
| 6 | 6 | 3 | 30 | 500 |
| 7 | 7 | 3 | 30 | 500 |
| 8 | 8 | 3 | 30 | 500 |
| 9 | 9 | 3 | 30 | 500 |
| 10 | 10 | 3 | 30 | 500 |
| 11 | 5 | 1 | 30 | 500 |
| 12 | 5 | 5 | 30 | 500 |
| 13 | 5 | 10 | 30 | 500 |
| 14 | 5 | 3 | 20 | 500 |
| 15 | 5 | 3 | 35 | 500 |
| 16 | 5 | 3 | 40 | 500 |
| 17 | 5 | 3 | 30 | 400 |
| 18 | 5 | 3 | 30 | 300 |
| 19 | 11 | 3 | 30 | 500 |
| 20 | 12 | 3 | 30 | 500 |
| 21 | 13 | 3 | 30 | 500 |
| 22 | 5 | 21 (under atmosphere) | 30 | 500 |

### 3. Evaluation of Images

The surface curability, blooming suppressibility, and bend cracking resistance of images 1 to 22 were evaluated in accordance with the following criteria.

### 3-1. Surface curability

A Force Gauge (manufactured by IMADA CO., LTD., ZP-50N) was pressed with a load of 200 g onto the area of each color in the image and moved across a region of 25 mm × 25 mm provided inside the area of each color at a constant rate to determine the coefficient of kinetic friction of each color. The images were evaluated in accordance with the following criteria, based on differences in coefficients of kinetic friction determined for the solid images of four colors.
A: Each of differences in coefficients of kinetic friction among all the colors is less than 0.1.
B: There is a combination of colors that provides a difference in coefficients of kinetic friction of 0.1 or more and less than 0.2, but no combination is present which provides a difference of 0.2 or more.
C: There is a combination of colors that provides a difference in coefficients of kinetic friction of 0.2 or more and less than 0.3, but no combination is present which provides a difference of 0.3 or more.
D: There is a combination of colors that provides a difference in coefficients of kinetic friction of 0.3 or more.

### 3-2. Blooming Suppressibility

The image was left to stand in an environment at a temperature of 40°C and a relative humidity of 80% for two weeks, and then, left to stand in an environment at a temperature of -25°C and a relative humidity of 50% for two weeks. This sequence was taken as one set of test. After four sets of test were carried out, the surface of the image was visually observed for presence of a white precipitate, and the 60° gloss value was measured. The images were evaluated in accordance with the following criteria, based on the results.
A: A white precipitate was not observed on the surface of the image, and the gloss was not lowered.
B: A white precipitate was observed on the surface of the image, and the gloss was lowered by less than 5.
C: A white precipitate was observed on the surface of the image, and the gloss was lowered by less than 10.
D: A white precipitate was observed on the surface of the image, and the gloss was lowered by less than 20.

### 3-3. Bend Cracking Resistance

The image was left to stand in an environment at a temperature of 25°C and a relative humidity of 60% for 24 hours and then mountain-folded in the longitudinal direction. Thereafter, adhesive tape (manufactured by 3M, Scotch super transparent tape S) was attached onto the area of each color so as to straddle the crease portion and then slowly peeled off. The crease of each color after the adhesive tape was peeled off was visually observed for presence of a portion from which the coated film was exfoliated thereon, and the image was evaluated in accordance with the following criteria, based on the results.
A: No exfoliation of the coated film is observed on the crease portions of all the colors.
B: Slight exfoliation of the coated film is observed on the crease portion in the black area.
C: Large exfoliation of the coated film is observed on the crease portion in the black area.
D: Exfoliation of the coated film is observed on the crease portion each in the black and yellow areas.

Evaluation results of images 1 to 22 are shown in Table 15.

### [Table 15]

**Table 15: Evaluation results**

| Image number | Surface curability | | | Blooming suppressibility | | | Bend cracking resistance | | |
|---|---|---|---|---|---|---|---|---|---|
| | Sheet A | Sheet B | Sheet C | Sheet A | Sheet B | Sheet C | Sheet A | Sheet B | Sheet C |
| 1 | B | B | B | B | B | B | A | A | A |
| 2 | B | B | B | A | B | B | A | A | A |
| 3 | A | A | A | A | A | B | A | A | A |
| 4 | B | B | B | A | A | B | A | A | A |
| 5 | A | A | B | A | A | A | A | A | A |
| 6 | A | A | B | B | B | B | A | B | B |
| 7 | A | A | A | A | A | A | A | B | B |
| 8 | A | A | B | A | B | B | A | A | A |
| 9 | A | A | B | A | A | A | A | B | B |
| 10 | A | A | B | A | A | A | B | B | B |
| 11 | A | A | A | A | A | A | A | A | A |
| 12 | A | B | B | A | A | B | A | A | A |
| 13 | B | B | B | A | B | B | A | A | A |
| 14 | A | A | B | A | A | A | A | A | B |
| 15 | A | A | B | A | A | B | A | A | A |
| 16 | A | B | B | A | B | B | A | A | A |
| 17 | A | B | B | A | A | A | A | A | B |
| 18 | B | B | B | A | A | A | A | B | B |
| 19 | D | D | D | D | D | D | D | D | D |
| 20 | B | B | B | B | B | B | D | D | D |
| 21 | C | C | C | B | B | B | C | C | D |
| 22 | C | C | D | C | D | D | C | C | C |

In images 1 to 17, which were each formed by irradiating actinic radiation-curable inkjet inks that each contain a radical polymerization initiator (component A), a polyfunctional radical polymerizable compound (component B), and a gelling agent and has the mass of the radical polymerization initiator to the mass of polyfunctional radical polymerizable compound ((A)/(B)) of 0.01 or more and less than 0.07 with actinic radiation, in an atmosphere having an oxygen concentration of 0.1vol% or more and 10.0vol% or less, blooming was unlikely to occur and bend cracking was also unlikely to occur.

Among images 1 to 10, which were formed under the same conditions, image 3 and images 5 to 10 formed using ink set 3 and ink sets 5 to 10 respectively, in which ink sets the proportion of the mass of the trifunctional or higher functional radical polymerizable compound to the total mass of the ink was 40mass% or more, differences in the surface curability among colors were unlikely to occur (particularly in the comparison of image 4 with image 5). It is conceived that this is because the degree of contribution of the radical polymerizable compound to the hardness of the cured film increased and thus differences in the surface curability among a plurality of inks, due to types and differences in amounts of other components such as colorants, were less likely to occur.

Among images 1 to 10, which were formed under the same conditions, in images 4 to 10 formed using ink sets 4 to 10 respectively, which ink sets contained substantially no radical polymerization initiator having a molecular weight of less than 350, blooming was unlikely to occur (particularly in the comparison of image 2 with image 4). It is conceived that this is because the degree of polymerization and crosslinking of the polyfunctional radical polymerizable compound was further enhanced by the radical polymerization initiator.

Among images 5 to 7 formed under the same conditions, in image 5 formed using ink set 5 having A/B of 0.02 or more and 0.04 or less, blooming and bend cracking were unlikely to occur.

Among images 1 to 9 formed under the same conditions, in images 1 to 7 each formed by using ink sets 1 to 7 respectively, in which ink sets the gelling agent is aliphatic ester or aliphatic ketone having a linear alkyl group containing 12 or more carbon atoms, blooming was less likely to occur than in image 8, which was formed using ink set 8 containing other gelling agent. It is conceived that this is because the radical polymerizable compound and the gelling agent were likely to be compatible to each other and thus the card house structure described above was likely to be formed.

In images 9 and 10 formed using ink sets 9 and 10 respectively, which ink sets each contained a gelling agent having a photocurable functional group, the gelling agent possibly polymerized with the radical polymerizable compound to be incorporated into the hydrocarbon chain(s), and then, blooming was less likely to occur than in image 8. In images 1 to 7 each formed using an ink set that contained a gelling agent having no photocurable functional group, however, bend cracking was less likely to occur than in images 9 and 10. It is conceived that this is because the gelling agent was not incorporated into the hydrocarbon chain(s) in images 1 to 7 and thus the cured film did not excessively harden and had flexibility.

Among image 5 and images 11 to 13 formed using the same ink set under the same conditions, in images 5 and 11 formed with an oxygen concentration of 4.0vol% or less, blooming was unlikely to occur. It is conceived that this is because a structure including more crosslinks in the vicinity of the surface of the cured film and thus the hardness of the surface of the cured film was enhanced.

Among image 5 and images 14 to 16 formed using the same ink set under the same conditions except for the surface temperature of the recording medium, blooming was unlikely to occur in images 5 and 15, which were formed with a temperature of the recording medium controlled at 35°C or less, and blooming was further unlikely to occur in image 14, which was formed with a temperature of the recording medium controlled at 25°C or less. It is conceived that this is because a decrease in the surface temperature of the recording medium reduced the amount of kinetic energy of the gelling agent and thus the gelling agent was unlikely to move to the surface of the cured film.

Among images 5, 17, and image 18 formed using the same ink set under the same conditions except for the light quantity of ultraviolet radiation to be directed, bend cracking resistance increased in image 17 formed with a light quantity of 350 mJ/cm² or more, and bend cracking resistance further increased in image 5 formed with a light quantity of 450 mJ/cm² or more. It is conceived that this is because the ink cured rapidly by the increase in the light quantity and thus uncrosslinked photocurable functional groups increased to thereby prevent the ink from excessively hardening.

In contrast to this, in image 19, which was formed using ink set 11 having (A)/(B) of less than 0.01, all of surface curability, blooming suppressibility, and bend cracking resistance were markedly evaluated lower than in images 1 to 10, which were formed under the same conditions except that the ink set having (A)/(B) of 0.01 or more and less than 0.07 was used. It is conceived that this is because a small amount of the radical polymerization initiator with respect to the polyfunctional radical polymerizable compound caused insufficient polymerization and crosslinking of the radical polymerizable compound and thus the ink failed to sufficiently cure and adhere to the recording medium.

In image 20, which was formed using ink set 12 having (A)/(B) of more than 0.07, bend cracking was markedly likely to occur than in images 1 to 10, which were formed under the same conditions except that the ink set having (A)/(B) of 0.01 or more and less than 0.07 was used. It is conceived that this is because a large amount of the radical polymerization initiator with respect to the polyfunctional radical polymerizable compound made the radical polymerizable compound excessively crosslink to thereby excessively harden the image.

In image 21, which was formed using ink set 13 containing no gelling agent, differences in surface curability among colors were markedly likely to occur and bend cracking was markedly likely to occur, than in images 1 to 10, which were formed under the same conditions except that an ink set containing a gelling agent was used. It is conceived that this is because absence of a gelling agent inside the cured film imparted no flexibility to the cured film and the image hardened inhomogeneously.

In image 22, which was formed under air atmosphere, all of the surface curability, blooming suppressibility, and bend cracking resistance were markedly evaluated lower than in image 5 and the like, which were formed under the same conditions except for irradiation with actinic radiation in an atmosphere having an oxygen concentration of 0.1vol% or more and 10.0vol% or less. It is conceived that this is because a small amount of the radical polymerization initiator contained in the ink caused inhibition of polymerization by oxygen and the like in an atmosphere in which the oxygen concentration was not reduced and thus the ink failed to sufficiently cure and adhere to the recording medium. In image 22, when the recording medium had a thickness of 0.6 mm or more, particularly blooming was likely to occur.

### Industrial Applicability

According to the image forming method of the present invention, it is possible to form an image in which blooming is unlikely to occur and bend cracking is also unlikely to occur, using gel inks. Accordingly, the present invention is expected to broaden applications of gel inks by inkjet methods and to contribute to development and proliferation of the techniques of the field.

### Reference Signs List

- 100: Image forming apparatus
- 110: Inkjet head
- 111: Nozzle
- 113: Nozzle face
- 120: Conveying section
- 121: Driving roller
- 122: Driven roller
- 123: Conveying belt
- 130: Irradiation section
- 140: Oxygen concentration adjusting section
- 141: Exhaust pipe
- 142: Supply pipe
- 145: Partition wall
- 148: Oxygen concentration measuring device
- 200: Recording medium

## Claims

1. An image forming method, comprising the steps of:
ejecting droplets of an actinic radiation-curable inkjet ink from a nozzle (111) of an inkjet head (110) and landing the droplets on a surface of a recording medium (200), wherein the inkjet ink comprises a radical polymerization initiator (A), a polyfunctional radical polymerizable compound (B), and a gelling agent, and has a ratio of a total mass of the radical polymerization initiator (A) to a total mass of the polyfunctional radical polymerizable compound (B) ((A)/(B)) of 0.01 or more and less than 0.07; and **characterized by**
irradiating the droplets landed on the recording medium (200) with actinic radiation in an atmosphere having an oxygen concentration of 0.1 vol% or more and 10.0 vol% or less.

2. The image forming method according to claim 1,
wherein the inkjet ink comprises a trifunctional or higher functional radical polymerizable compound as the polyfunctional radical polymerizable compound, and
a proportion of a mass of the trifunctional or higher functional radical polymerizable compound based on a total mass of the inkjet ink is 40 mass% or more.

3. The image forming method according to claim 1 or 2, wherein the inkjet ink comprises a radical polymerization initiator having a molecular weight of 350 or more as the radical polymerization initiator.

4. The image forming method according to any one of claims 1 to 3, wherein the inkjet ink comprises an aliphatic ester or aliphatic ketone having a linear alkyl group with 12 or more and 25 or less carbon atoms as the gelling agent.

5. The image forming method according to any one of claims 1 to 4, wherein the recording medium (200) has a thickness of 0.6 mm or more.

6. The image forming method according to any one of claims 1 to 5, wherein the irradiating with actinic radiation is performed while a surface temperature of the recording medium (200) is controlled at 20°C or more and 40°C or less.

7. The image forming method according to any one of claims 1 to 6, wherein the landing is landing each of droplets of a plurality of the inkjet inks each having a different composition on the recording medium (200).

## Patentansprüche

1. Bilderzeugungsverfahren, umfassend die Schritte:
Ausstoßen von Tröpfchen einer mittels aktinischer Strahlung härtbaren Tintenstrahltinte aus einer Düse (111) eines Tintenstrahlkopfes (110) sowie Herbeiführen eines Auftreffens der Tröpfchen auf eine Oberfläche eines Aufzeichnungsmediums (200), wobei die Tintenstrahltinte einen radikalischen Polymerisationsinitiator (A), eine polyfunktionelle radikalisch polymerisierbare Verbindung (B) und ein Geliermittel umfasst und ein Verhältnis von Gesamtmasse des radikalischen Polymerisationsinitiators (A) zur Gesamtmasse der polyfunktionellen radikalisch polymerisierbaren Verbindung (B) ((A)/(B)) von 0.01 oder mehr und weniger als 0.07 aufweist; und **gekennzeichnet durch**
Bestrahlen der auf dem Aufzeichnungsmedium (200) aufgetroffenen Tröpfchen mit aktinischer Strahlung in einer Atmosphäre, welche eine Sauerstoffkonzentration von 0.1 Vol.-% oder mehr und 10.0 Vol.-% oder weniger aufweist.

2. Bilderzeugungsverfahren gemäß Anspruch 1,
wobei die Tintenstrahltinte eine trifunktionelle oder höherfunktionelle radikalisch polymerisierbare Verbindung als polyfunktionelle radikalisch polymerisierbare Verbindung umfasst, und
der Massenanteil an trifunktioneller oder höherfunktioneller radikalisch polymerisierbarer Verbindung 40 Masse% oder mehr, bezogen auf die Gesamtmasse der Tintenstrahltinte, beträgt.

3. Bilderzeugungsverfahren gemäß Anspruch 1 oder 2, wobei die Tintenstrahltinte einen radikalischen Polymerisationsinitiator mit einem Molekulargewicht von 350 oder mehr als radikalischen Polymerisationsinitiator umfasst.

4. Bilderzeugungsverfahren gemäß einem der Ansprüche 1 bis 3, wobei die Tintenstrahltinte einen aliphatischen Ester oder ein aliphatisches Keton, welcher/welches eine lineare Alkylgruppe mit 12 oder mehr und 25 oder weniger Kohlenstoffatomen aufweist, als Geliermittel umfasst.

5. Bilderzeugungsverfahren gemäß einem der Ansprüche 1 bis 4, wobei das Aufzeichnungsmedium (200) eine Dicke von 0.6 mm oder mehr aufweist.

6. Bilderzeugungsverfahren gemäß einem der Ansprüche 1 bis 5, wobei die Bestrahlung mit aktinischer Strahlung unter gleichzeitiger Einstellung der Oberflächentemperatur des Aufzeichnungsmediums (200) auf 20°C oder mehr und 40°C oder weniger erfolgt.

7. Bilderzeugungsverfahren gemäß einem der Ansprüche 1 bis 6, wobei das Auftreffen jeweils das Auftreffen von Tröpfchen einer Vielzahl von Tintenstrahltinten mit jeweils unterschiedlicher Zusammensetzung auf dem Aufzeichnungsmedium (200) vorsieht.

## Revendications

1. Procédé de formation d'image, comprenant les étapes de :
éjection de gouttelettes d'une encre à jet d'encre durcissable par rayonnement actinique à partir d'une buse (111) d'une tête à jet d'encre (110) et dépôt des gouttelettes sur une surface d'un support d'enregistrement (200),
dans lequel l'encre à jet d'encre comprend un initiateur de polymérisation radicalaire (A), un composé polymérisable radicalaire polyfonctionnel (B), et un agent gélifiant, et a un rapport entre une masse totale de l'initiateur de polymérisation radicalaire (A) et une masse totale du composé polymérisable radicalaire polyfonctionnel (B) ((A)/(B)) de 0,01 ou plus et de moins de 0,07 ; et
**caractérisé par**
l'irradiation des gouttelettes déposées sur le support d'enregistrement (200) avec un rayonnement actinique dans une atmosphère ayant une concentration en oxygène de 0,1 % en volume ou plus et de 10,0 % en volume ou moins.

2. Procédé de formation d'image selon la revendication 1,
dans lequel l'encre à jet d'encre comprend un composé polymérisable radicalaire trifonctionnel ou à fonctionnalité supérieure en tant que composé polymérisable radicalaire polyfonctionnel, et
une proportion d'une masse du composé polymérisable radicalaire trifonctionnel ou à fonctionnalité supérieure sur la base d'une masse totale de l'encre à jet d'encre est de 40 % en masse ou plus.

3. Procédé de formation d'image selon la revendication 1 ou 2,
dans lequel l'encre à jet d'encre comprend un initiateur de polymérisation radicalaire ayant un poids moléculaire de 350 ou plus en tant qu'initiateur de polymérisation radicalaire.

4. Procédé de formation d'image selon l'une quelconque des revendications 1 à 3, dans lequel l'encre à jet d'encre comprend un ester aliphatique ou une cétone aliphatique ayant un groupe alkyle linéaire avec 12 atomes de carbone ou plus et 25 atomes de carbone ou moins en tant qu'agent gélifiant.

5. Procédé de formation d'image selon l'une quelconque des revendications 1 à 4, dans lequel le support d'enregistrement (200) a une épaisseur de 0,6 mm ou plus.

6. Procédé de formation d'image selon l'une quelconque des revendications 1 à 5, dans lequel l'irradiation avec un rayonnement actinique est réalisée tandis qu'une température de surface du support d'enregistrement (200) est régulée à 20 °C ou plus et 40 °C ou moins.

7. Procédé de formation d'image selon l'une quelconque des revendications 1 à 6, dans lequel le dépôt consiste à déposer chacune des gouttelettes d'une pluralité d'encres à jet d'encre ayant chacune une composition différente sur le support d'enregistrement (200).
